# EUROPÄISCHE PATENTSCHRIFT

(11) **EP 4 078 754 B1**
(45) Veröffentlichungstag und Bekanntmachung des Hinweises auf die Patenterteilung: **29.10.2025**
(21) Anmeldenummer: 20823786.7
(22) Anmeldetag: 09.12.2020
(51) Int. Cl.: H02H 3/02, B60L 3/00, B60L 3/04, H02H 5/12, H02H 9/04

(54) **SCHUTZVORRICHTUNG FÜR EIN ELEKTRISCHES GLEICHSTROMNETZ, BORDNETZ FÜR EIN FAHRZEUG, FAHRZEUG UND GLEICHSTROMLADESTATION**
PROTECTION DEVICE FOR AN ELECTRIC DC GRID, ON-BOARD ELECTRICAL SYSTEM FOR A VEHICLE, VEHICLE, AND DC CHARGING STATION
DISPOSITIF DE PROTECTION D'UN RÉSEAU ÉLECTRIQUE À COURANT CONTINU, SYSTÈME ÉLECTRIQUE EMBARQUÉ D'UN VÉHICULE, VÉHICULE ET STATION DE CHARGE À COURANT CONTINU

(30) Priorität: 18.12.2019 DE 102019008833
(43) Veröffentlichungstag der Anmeldung: 26.10.2022
(73) Patentinhaber: Mercedes-Benz Group AG, 70372 Stuttgart (DE)
(72) Erfinder: BOEHME, Urs, 71139 Ehningen (DE)
(74) Vertreter: Novagraaf Group
(86) Internationale Anmeldenummer: PCT/EP2020/085318
(87) Internationale Veröffentlichungsnummer: WO 2021/122234

(56) Entgegenhaltungen:
- EP-A1- 2 570 289
- EP-A1- 2 570 289
- DE-B3- 102018 116 055
- JP-A- 2008 312 403
- US-A1- 2013 207 619

## Beschreibung

Die Erfindung betrifft eine Schutzvorrichtung für ein elektrisches Gleichstromnetz nach den Merkmalen des Oberbegriffs des Anspruchs 1, ein Bordnetz für ein Fahrzeug, ein Fahrzeug und eine Gleichstromladestation.

Aus dem Stand der Technik ist, wie in der DE 10 2017 009 355 A1 beschrieben, ein Verfahren zum Betreiben von elektrischen Bordnetzen bekannt. In dem Verfahren zum Betreiben eines mit einer ersten elektrischen Gleichspannung beaufschlagten ersten Bordnetzes und eines mit einer zweiten elektrischen Gleichspannung beaufschlagten zweiten Bordnetzes werden das erste und das zweite Bordnetz mittels eines einen ersten getakteten Energiewandler aufweisenden Energiekopplers elektrisch gekoppelt. Die erste und die zweite elektrische Gleichspannung sind mittels einer elektrischen Isolationseinrichtung gegenüber einem elektrischen Bezugspotential elektrisch isoliert. Die elektrische Isolationseinrichtung wird überwacht. Das erste und das zweite Bordnetz werden mittels des Energiekopplers galvanisch gekoppelt. Bei einer Störung der Isolationseinrichtung in einem Bereich eines der beiden Bordnetze steuert der Energiekoppler elektrische Potentiale des jeweiligen anderen der beiden Bordnetze derart, dass jeweilige Potentialdifferenzen von diesen elektrischen Potentialen zum Bezugspotential kleiner als ein vorgegebener Vergleichswert sind.

In der DE 10 2017 009 352 A1 werden ein Energiekoppler zum elektrischen Koppeln von elektrischen Bordnetzen und ein Verfahren zum elektrischen Koppeln von elektrischen Bordnetzen beschrieben. Der Energiekoppler zum elektrischen Koppeln eines mit einer ersten elektrischen Gleichspannung beaufschlagten ersten Bordnetzes mit einem mit einer zweiten elektrischen Gleichspannung beaufschlagten zweiten elektrischen Bordnetz weist einen ersten getakteten Energiewandler und einen zweiten getakteten Energiewandler auf. Der erste und der zweite getaktete Energiewandler weisen jeweils einen Bordnetzanschluss und einen Zwischenkreisanschluss auf. Der Bordnetzanschluss des ersten getakteten Energiewandlers ist an das erste Bordnetz angeschlossen und der Bordnetzanschluss des zweiten getakteten Energiewandlers ist an das zweite Bordnetz angeschlossen. Die Zwischenkreisanschlüsse des ersten und des zweiten getakteten Energiewandlers sind an einen gemeinsamen Gleichspannungszwischenkreis angeschlossen. Ein erstes elektrisches Potential des Gleichspannungszwischenkreises ist mittels des ersten getakteten Energiewandlers mit einem der elektrischen Potentiale des ersten Bordnetzes elektrisch verbunden und ein zweites elektrisches Potential des Gleichspannungszwischenkreises ist mittels des zweiten getakteten Energiewandlers mit einem der elektrischen Potentiale des zweiten Bordnetzes elektrisch verbunden.

Die Schrift JP 2008 - 312 403 A zeigt ein Wandlersystem mit einem Wandlerteil zur Umwandlung eines Wechselstroms in Gleichstrom, mit einem Wechselrichterteil zum Ändern des vom Wandlerteil erhaltenen Gleichstroms in Wechselstrom und einem Zwischenkreis, über den der Wandlerteil mit dem Wechselrichterteil verbunden ist. Ein Kondensator ist zwischen dem positiven/negativen Potential des Zwischenkreises und einem Zwischenpotential als virtueller Nullpunkt angeordnet. Eine Entladeschaltung zum Entladen einer elektrischen Ladung des Kondensators bewirkt auch eine Entladung der Spannung des Zwischenkreises wenn eine Erdschlusserkennungseinrichtung einen Erdschlussfehler des Zwischenkreises erkennt.

Aus der DE 10 2018 116 055 B3 ist ein Verfahren zur Isolationsüberwachung eines HV-Systems bekannt, bei dem das HV-System eine erste Leitung mit einem ersten Spannungswert HV+ und eine zweite Leitung mit einem zweiten Spannungswert HVaufweist. Zwischen HV+ und Masse wird ein erster Potentialunterschied gebildet und zwischen HV- und Masse wird ein zweiter Potentialunterschied gebildet wobei eine erste Serienschaltung eines ersten Halbleiterschalters mit einem ersten Widerstand zwischen HV+ und Masse angeordnet wird und eine zweite Serienschaltung eines zweiten Halbleiterschalters mit einem zweiten Widerstand zwischen HV- und Masse angeordnet wird. Auf den beiden Halbleiterschaltern wird nun je eine Pulsweitenmodulation ausgeführt mittels der anhand der Serienschaltung mit den Widerständen eine erste Spannungsmessung darüber durchgeführt wird und dadurch ein erstes Wertepaar aus erstem und zweitem Potentialunterschied ermittelt wird. Aus einem zweiten Paar an Widerstandswerten wird eine zweite Spannungsmessung durchgeführt und dadurch ein zweites Wertepaar aus erstem und zweitem Potentialunterschied ermittelt, so dass aus den beiden Wertepaaren ein erster Isolationswiderstand der ersten Leitung und ein zweiter Isolationswiderstand der zweiten Leitung berechnet werden kann.

Die US 2013/207619 A1 offenbart eine Entladevorrichtung mit einem Verfahren zur Entladung eines Hauptkondensators eines elektrischen Energiesystem eines Fahrzeugs mit Elektroantrieb. Die Entladevorrichtung umfasst einen Entladezweig eines Stromkreises, der parallel zum Hauptkondensator geschaltet ist und einen Entladetransistor enthält, der in den Durchleitungsmodus geschaltet ist, wenn der Hauptkondensator entladen werden muss. Eine Steuervorrichtung ist mit dem Entladetransistor verbunden und steuert den Entladetransistor.

Die EP 2 570 289 A1 betrifft eine Einrichtung zur Erfassung des Isolationswiderstandes eines Hochvoltbatteriesystems eines Kraftfahrzeuges mit einer Hochvoltbatterie und über Schütze damit verbundene Hochvoltkomponenten. Zur Erfassung des Isolationswiderstandes umfasst die Einrichtung einen durch einen Schalter schaltbaren Referenzwiderstand mit einer Spannungsmessvorrichtung zur Erfassung einer anliegenden Spannung, eine Spannungsmessvorrichtung zur Messung der Hochspannung zwischen den Polen und eine Koppelschaltung zur Überwachung einer Hochvoltkomponente bei geöffneten Schützen der Hochvoltbatterie.

Der Erfindung liegt die Aufgabe zu Grunde, eine gegenüber dem Stand der Technik verbesserte Schutzvorrichtung für ein elektrisches Gleichstromnetz, ein gegenüber dem Stand der Technik verbessertes Bordnetz für ein Fahrzeug, ein Fahrzeug mit einem solchen Bordnetz und eine gegenüber dem Stand der Technik verbesserte Gleichstromladestation anzugeben.

Die Aufgabe wird erfindungsgemäß gelöst durch eine Schutzvorrichtung für ein elektrisches Gleichstromnetz mit den Merkmalen des Anspruchs 1, Bordnetz für ein Fahrzeug mit den Merkmalen des Anspruchs 5, ein Fahrzeug mit den Merkmalen des Anspruchs 6 und eine Gleichstromladestation mit den Merkmalen des Anspruchs 7.

Vorteilhafte Ausgestaltungen der Erfindung sind Gegenstand der Unteransprüche.

Eine erfindungsgemäße Schutzvorrichtung für ein elektrisches Gleichstromnetz, insbesondere für ein Hochvoltnetz, beispielsweise für ein Bordnetz eines Fahrzeugs, umfasst eine erste Spannungsmessvorrichtung zwischen einer Pluspotentialleitung und einer Bezugspotentialleitung zur Messung einer Spannung zwischen der Pluspotentialleitung und der Bezugspotentialleitung und eine zweite Spannungsmessvorrichtung zwischen einer Minuspotentialleitung und der Bezugspotentialleitung zur Messung einer Spannung zwischen der Minuspotentialleitung und der Bezugspotentialleitung. Das Bezugspotential ist insbesondere ein elektrisches Massepotential, bei Verwendung der Schutzvorrichtung in einem Fahrzeug insbesondere ein Fahrzeugmassepotential, bei Verwendung der Schutzvorrichtung in einer Gleichstromladestation beispielsweise ein Erdpotential.

Des Weiteren umfasst die Schutzvorrichtung eine Schutzschaltung. Die Schutzschaltung umfasst beispielsweise eine elektrische Reihenschaltung eines Entladewiderstands und eines ersten Schutzschalters zwischen der Pluspotentialleitung und der Bezugspotentialleitung und eine elektrische Reihenschaltung des Entladewiderstands und eines zweiten Schutzschalters zwischen der Minuspotentialleitung und der Bezugspotentialleitung. Alternativ umfasst die Schutzschaltung zwei Schutzschaltungsteile, wobei der erste Schutzschaltungsteil eine elektrische Reihenschaltung eines ersten Entladewiderstands und eines ersten Schutzschalters zwischen der Pluspotentialleitung und der Bezugspotentialleitung umfasst und der zweite Schutzschaltungsteil eine elektrische Reihenschaltung eines zweiten Entladewiderstands und eines zweiten Schutzschalters zwischen der Minuspotentialleitung und der Bezugspotentialleitung umfasst.

Bei beiden Varianten der Schutzschaltung der Schutzvorrichtung ist der erste Schutzschalter bei einem mittels der ersten Spannungsmessvorrichtung ermittelten Unterschreiten eines vorgegebenen Spannungswertes zum Schließen ansteuerbar und der zweite Schutzschalter ist bei einem mittels der zweiten Spannungsmessvorrichtung ermittelten Unterschreiten des vorgegebenen Spannungswertes zum Schließen ansteuerbar.

Alternativ ist der erste Schutzschalter bei einem mittels der zweiten Spannungsmessvorrichtung ermittelten Überschreiten eines vorgegebenen Spannungswertes zum Schließen ansteuerbar und der zweite Schutzschalter ist bei einem mittels der ersten Spannungsmessvorrichtung ermittelten Überschreiten eines vorgegebenen Spannungswertes zum Schließen ansteuerbar.

Alternativ zu den beiden Spannungsmessvorrichtungen kann eine Fehlerstrommessvorrichtung in der Bezugspotentialleitung vorgesehen sein. Dann ist in beiden Varianten der Schutzschaltung der erste Schutzschalter und/oder der zweite Schutzschalter bei einem mittels der Fehlerstrommessvorrichtung gemessenen Fehlerstrom zum Schließen ansteuerbar.

Erfindungsgemäß ist zum Entladewiderstand eine elektrische Reihenschaltung aus einem Schutzkondensator und einem Schutzwiderstand elektrisch parallel geschaltet.

Ein erfindungsgemäßes elektrisches Bordnetz, insbesondere Hochvoltbordnetz, für ein Fahrzeug, insbesondere für ein Elektrofahrzeug oder Hybridfahrzeug, umfasst eine solche Schutzvorrichtung.

Ein erfindungsgemäßes Fahrzeug, insbesondere Elektrofahrzeug oder Hybridfahrzeug, umfasst eine solche Schutzvorrichtung, insbesondere ein solches elektrisches Bordnetz, insbesondere Hochvoltbordnetz, mit einer solchen Schutzvorrichtung.

Eine erfindungsgemäße, insbesondere fahrzeugexterne, Gleichstromladestation, insbesondere Hochvoltgleichstromladestation, insbesondere zum elektrischen Laden eines Fahrzeugs, insbesondere eines Elektrofahrzeugs oder Hybridfahrzeugs, insbesondere einer Hochvoltbatterie eines solchen Fahrzeugs, umfasst eine solche Schutzvorrichtung.

Unter dem Begriff "Hochvolt" ist insbesondere eine elektrische Gleichspannung zu verstehen, die insbesondere größer als etwa 60 V ist. Insbesondere ist der Begriff "Hochvolt" konform zur Norm ECE R 100 auszulegen.

Die erfindungsgemäße Lösung löst die mit Y-Kondensatoren in Fahrzeugen, insbesondere in Elektrofahrzeugen und Hybridfahrzeugen, und in Gleichstromladestationen verbundenen Probleme, wie im Folgenden erläutert wird. Solche Y-Kondensatoren werden als Maßnahmen verwendet, um Emission von EMV-Störungen zu reduzieren (EMV = elektromagnetische Verträglichkeit). Allerdings stellen sie ein erhöhtes Gefährdungspotential aus Hochvoltsicherheitsgründen dar. Beispielsweise wird in der Norm SAE J1772, IEC60479-1 und -2 eine enthaltene Ladungsmenge in den Y-Kondensatoren als gesundheitsgefährdendes Merkmal genannt (C1-Kennlinie). Mit zunehmender Betriebsspannung des Fahrzeugs wird es immer schwieriger, geforderte Grenzwerte dieser Normen einzuhalten. Teilweise sind auch alternative Maßnahmen, so genannte alternative Measures, zur Einhaltung von Sicherheitsvorgaben, beispielsweise eine verstärkte, insbesondere doppelte, elektrische Isolation, nicht zugelassen. Die weitere Norm LV123 und damit verbundene Normen. schreiben beispielsweise einen maximalen Energieinhalt von 0,2 J für die Ladungsmenge aller Y-Kondensatoren vor. Wenn der Ausweg über die alternativen Maßnahmen erlaubt ist, dann kann beispielsweise die bereits erwähnte verstärkte, insbesondere doppelte, elektrische Isolation verwendet werden. Dies ist jedoch nur umsetzbar, wenn alle Hochvoltsysteme, die miteinander gekoppelt werden, entsprechend verstärkt isoliert sind. D. h. dass beispielsweise beim Gleichstromladen sowohl das Fahrzeug als auch die Gleichstromladestation, insbesondere Ladesäule, entsprechend verstärkt isoliert sein müssen. Da hierfür jedoch kein zwingender Standard existiert, wären auch Kopplungen von Systemen mit unterschiedlichen Isolationsauslegungen möglich, wodurch die Sicherheitsanforderungen nicht eingehalten werden.

Dieses Problem wird durch die beschriebene Erfindung gelöst, denn durch eine Spannungsmessung je Hochvoltpotential zum Bezugspotential, insbesondere Massepotential, wird eine Verschiebung der Hochvoltpotentiale bezogen auf das Bezugspotential erkannt, der die Folge eines Körperstroms sein kann, d. h. die Folge eines, insbesondere menschlichen, Körperkontakts mit einem der Hochvoltpotentiale und mit dem Bezugspotential. Um beim betroffenen Hochvoltpotential, bei welchem sich die Spannung zum Bezugspotential reduziert, die Spannung so schnell wie möglich zu reduzieren, wird der Entladewiderstand und elektrisch parallel dazu ein ungeladener Schutzkondensator hinzugeschaltet. Die Spannung zwischen dem betroffenen Hochvoltpotential zum Bezugspotential springt dadurch schlagartig auf ein wesentlich niedrigeres Niveau, wodurch sich der Körperstrom proportional zur Spannung reduziert. Die erfindungsgemäße Lösung ermöglicht somit eine Reduzierung eines durch die Y-Kondensatoren verursachten elektrischen Schlags für den, insbesondere menschlichen, Körper. Eine Einhaltung der oben beschriebenen Anforderungen wird somit ermöglicht. Ebenfalls ist es möglich, die durch den Körperwiderstand umgesetzte elektrische Energie der Y-Kondensatoren auf ein Maß unterhalb von 0,2 J zu begrenzen, obwohl die in den Y-Kondensatoren gespeicherte Energie wesentlich höher sein kann.

Zum Entladewiderstand ist erfindungsgemäß, wie oben bereits erwähnt, ein Schutzkondensator elektrisch parallel geschaltet. Der Entladewiderstand allein müsste sehr niederohmig sein, um den Körperstrom schnell zu reduzieren. Nachteilig ist jedoch, dass damit ein niederohmiger Isolationsfehler erzeugt wird. Daher ist die Kombination aus Entladewiderstand und elektrisch parallel geschaltetem Schutzkondensator wesentlich vorteilhafter. Der Entladewiderstand stellt sicher, dass der elektrisch parallel geschaltete Schutzkondensator im Moment des Zuschaltens spannungsfrei war. Nach dem Zuschalten sorgt er für eine schnelle Entladung der Y-Kondensatoren des betroffenen Hochvoltpotentials.

Die Schutzschaltung umfasst somit beispielsweise die elektrische Reihenschaltung des Entladewiderstands und des ersten Schutzschalters zwischen der Pluspotentialleitung und der Bezugspotentialleitung und die elektrische Reihenschaltung des Entladewiderstands und des zweiten Schutzschalters zwischen der Minuspotentialleitung und der Bezugspotentialleitung, wobei der Schutzkondensator zum Entladewiderstand elektrisch parallel geschaltet ist. Alternativ umfasst die Schutzschaltung die beiden Schutzschaltungsteile, wobei der erste Schutzschaltungsteil die elektrische Reihenschaltung des ersten Entladewiderstand und des ersten Schutzschalters zwischen der Pluspotentialleitung und der Bezugspotentialleitung umfasst, wobei zum ersten Entladewiderstand ein erster Schutzkondensator elektrisch parallel geschaltet ist, und wobei der zweite Schutzschaltungsteil die elektrische Reihenschaltung des zweiten Entladewiderstands und des zweiten Schutzschalters zwischen der Minuspotentialleitung und der Bezugspotentialleitung umfasst, wobei zum zweiten Entladewiderstand ein zweiter Schutzkondensator elektrisch parallel geschaltet ist.

Erfindungsgemäß ist zum Entladewiderstand nicht nur der Schutzkondensator elektrisch parallel geschaltet, sondern es ist eine elektrische Reihenschaltung aus dem Schutzkondensator und einem Schutzwiderstand elektrisch parallel geschaltet. Mittels des Schutzwiderstands wird vorteilhafterweise ein Strom über den Schutzkondensator begrenzt.

Die Schutzschaltung umfasst somit beispielsweise die elektrische Reihenschaltung des Entladewiderstands und des ersten Schutzschalters zwischen der Pluspotentialleitung und der Bezugspotentialleitung und die elektrische Reihenschaltung des Entladewiderstands und des zweiten Schutzschalters zwischen der Minuspotentialleitung und der Bezugspotentialleitung, wobei die elektrische Reihenschaltung aus dem Schutzkondensator und dem Schutzwiderstand zum Entladewiderstand elektrisch parallel geschaltet ist. Alternativ umfasst die Schutzschaltung die beiden Schutzschaltungsteile, wobei der erste Schutzschaltungsteil die elektrische Reihenschaltung des ersten Entladewiderstand und des ersten Schutzschalters zwischen der Pluspotentialleitung und der Bezugspotentialleitung umfasst, wobei zum ersten Entladewiderstand eine elektrische Reihenschaltung aus dem ersten Schutzkondensator und einem ersten Schutzwiderstand elektrisch parallel geschaltet ist, und wobei der zweite Schutzschaltungsteil die elektrische Reihenschaltung des zweiten Entladewiderstands und des zweiten Schutzschalters zwischen der Minuspotentialleitung und der Bezugspotentialleitung umfasst, wobei zum zweiten Entladewiderstand eine elektrische Reihenschaltung aus dem zweiten Schutzkondensator und einem zweiten Schutzwiderstand elektrisch parallel geschaltet ist.

Beispielsweise ist eine mit der ersten Spannungsmessvorrichtung und dem ersten Schutzschalter gekoppelte erste Spannungsauswerteeinheit zur Auswertung einer von der ersten Spannungsmessvorrichtung ermittelten Spannung und zur Ansteuerung des ersten Schutzschalters bei Unterschreiten des vorgegebenen Spannungsgrenzwertes vorgesehen und eine mit der zweiten Spannungsmessvorrichtung und dem zweiten Schutzschalter gekoppelte zweite Spannungsauswerteeinheit zur Auswertung einer von der zweiten Spannungsmessvorrichtung ermittelten Spannung und zur Ansteuerung des zweiten Schutzschalters bei Unterschreiten des vorgegebenen Spannungsgrenzwertes vorgesehen.

Alternativ ist beispielsweise eine mit den Spannungsmessvorrichtungen und den Schutzschaltern gekoppelte gemeinsame Spannungsauswerteeinheit zur Auswertung der von der ersten Spannungsmessvorrichtung ermittelten Spannung und der von der zweiten Spannungsmessvorrichtung ermittelten Spannung und zur Ansteuerung des ersten Schutzschalters bei Unterschreiten des vorgegebenen Spannungsgrenzwertes durch die von der ersten Spannungsmessvorrichtung ermittelte Spannung und zur Ansteuerung des zweiten Schutzschalters bei Unterschreiten des vorgegebenen Spannungsgrenzwertes durch die von der zweiten Spannungsmessvorrichtung ermittelte Spannung vorgesehen.

Bei Verwendung der Fehlerstrommessvorrichtung ist entsprechend beispielsweise eine mit der Fehlerstrommessvorrichtung und den Schutzschaltern gekoppelte Stromauswerteeinheit zur Auswertung des gemessenen Fehlerstroms und zur Ansteuerung des ersten Schutzschalters und/oder des zweiten Schutzschalters in Abhängigkeit vom gemessenen Fehlerstrom vorgesehen.

In einer möglichen Ausführungsform kann vorgesehen sein, dass die gemeinsame Spannungsauswerteeinheit mit einer dritten Spannungsmessvorrichtungen und einer vierten Spannungsmessvorrichtung gekoppelt ist, wobei die dritte Spannungsmessvorrichtung zwischen der Pluspotentialleitung und der Bezugspotentialleitung zur Messung einer Spannung zwischen der Pluspotentialleitung und der Bezugspotentialleitung angeordnet ist und die vierte Spannungsmessvorrichtung zwischen der Minuspotentialleitung und der Bezugspotentialleitung zur Messung einer Spannung zwischen der Minuspotentialleitung und der Bezugspotentialleitung angeordnet ist, und wobei in der Pluspotentialleitung zwischen einer Verbindungsstelle zur ersten Spannungsmessvorrichtung und einer Verbindungsstelle zur dritten Spannungsmessvorrichtung eine erste Schalteinheit angeordnet ist und in der Minuspotentialleitung zwischen einer Verbindungsstelle zur zweiten Spannungsmessvorrichtung und einer Verbindungsstelle zur vierten Spannungsmessvorrichtung eine zweite Schalteinheit angeordnet ist. Diese Ausführungsform bietet sich insbesondere für das Hochvoltbordnetz eines Elektrofahrzeugs oder Hybridfahrzeugs an, wobei die erste und zweite Schalteinheit Ladeschütze des Hochvoltbordnetzes sind, welche zum Gleichstromladen nach Anschluss an eine Gleichstromladestation geschlossen werden. Durch diese Lösung ist bereits vor dem Schließen der Schalteinheiten, d. h. der Ladeschütze, und einem damit zwangsweise verbundenen Vergrößern der Kapazität der Y-Kondensatoren durch die Parallelschaltung von Gleichstromladestation und Fahrzeug feststellbar, ob die Schutzschaltung in der Lage wäre, bei einer fehlerhaften Isolation, beispielsweise in einem Ladekabel, gesetzliche Grenzwerte einhalten zu können.

Der jeweilige Schutzschalter ist beispielsweise als ein Halbleiterschalter ausgebildet, zum Beispiel als ein MOSFET, IGBT oder Thyristor.

Ausführungsbeispiele der Erfindung werden im Folgenden anhand von Zeichnungen näher erläutert.

Dabei zeigen:
- Fig. 1: schematisch eine Ausführungsform eines Gleichstromnetzes mit einer Schutzvorrichtung,
- Fig. 2: schematisch eine Funktionsweise der Schutzvorrichtung aus Figur 1,
- Fig. 3: schematisch eine alternative Schutzvorrichtung,
- Fig. 4: schematisch eine weitere Ausführungsform eines Gleichstromnetzes mit einer Schutzvorrichtung,
- Fig. 5: schematisch eine weitere Ausführungsform eines Gleichstromnetzes mit einer Schutzvorrichtung,
- Fig. 6: schematisch Simulationsergebnisse einer Simulation,
- Fig. 7: schematisch Simulationsergebnisse einer Simulation,
- Fig. 8: schematisch Simulationsergebnisse einer Simulation,
- Fig. 9: schematisch eine bauteiloptimierte Schutzschaltung,
- Fig. 10: schematisch eine Schutzvorrichtung,
- Fig. 11: schematisch eine Funktionsweise einer Schutzschaltung, und
- Fig. 12: schematisch Spannungen und Ströme im Zeitverlauf bei der in Figur 11 dargestellten Funktionsweise.

Einander entsprechende Teile sind in allen Figuren mit den gleichen Bezugszeichen versehen.

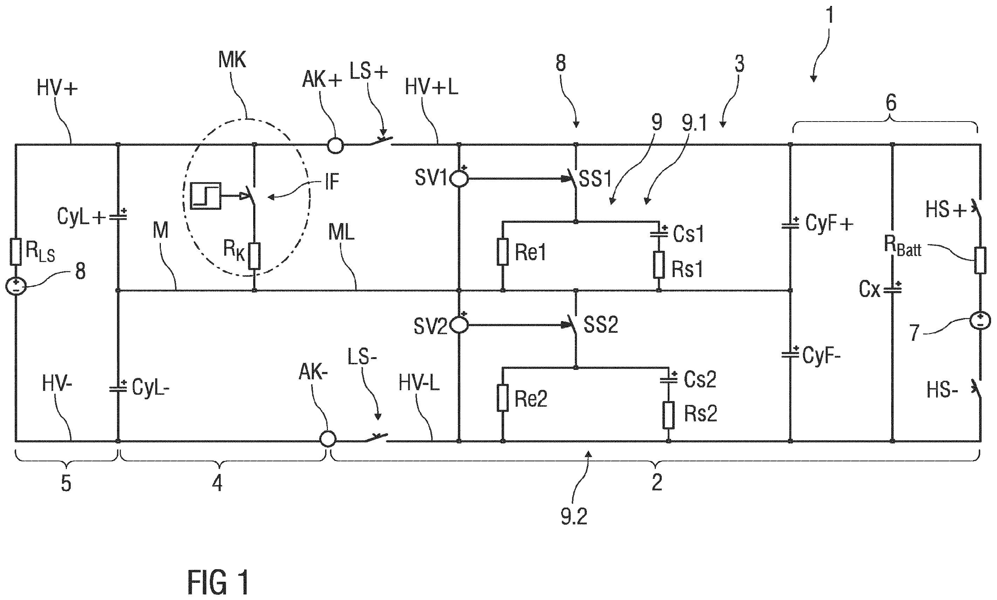

Anhand der Figuren 1 bis 13 wird im Folgenden eine Schutzvorrichtung 8 für ein elektrisches Gleichstromnetz 1, insbesondere für ein Hochvoltnetz, beschrieben. Das Hochvoltnetz ist in den dargestellten Beispielen ein Hochvoltbordnetz 3 eines Fahrzeugs 2, insbesondere eines Elektrofahrzeugs oder Hybridfahrzeugs, in welchem die Schutzvorrichtung 8 vorteilhafterweise verwendet wird. Die Schutzvorrichtung 8 ist jedoch alternativ oder zusätzlich auch in einer Gleichstromladestation 5 einsetzbar, an welcher das Fahrzeugs 2 und andere Fahrzeuge, insbesondere Elektrofahrzeuge und Hybridfahrzeuge, zum elektrischen Laden einer Hochvoltbatterie 6 des Fahrzeugs 2 angeschlossen werden können. Das Gleichstromnetz 1 umfasst dann im angeschlossenen Zustand des Fahrzeugs 2 das Bordnetz 3, insbesondere Hochvoltbordnetz 3, des Fahrzeugs 2 und die Gleichstromladestation 5. Die Hochvoltbatterie 6 des Fahrzeugs 2, welche an dieser Gleichstromladestation 5 elektrisch geladen wird, dient insbesondere der Bereitstellung elektrischer Energie für mindestens eine elektrische Antriebseinheit des Fahrzeugs 2 zum Antrieb des Fahrzeugs 2.

Sowohl im Fahrzeug 2 als auch in der Gleichstromladestation 5 werden Y-Kondensatoren CyF+, CyF-, CyL+, CyL- als Maßnahme verwendet, um eine Emission von EMV-Störungen (EMV = elektromagnetische Verträglichkeit) zu reduzieren. Insbesondere sind Y-Kondensatoren CyF+, CyF-, CyL+, CyL- meist günstigere und kompaktere EMV-Filtermaßnahme im Vergleich zu induktiven Entstörfiltern, beispielsweise Common- oder Differential-Moder Drosseln. Aus Sicht der EMV wäre es somit vorteilhaft, Y-Kondensatoren CyF+, CyF-, CyL+, CyL- mit großen Kapazitätswerten zu verwenden.

Nachteilig bei einem elektrifizierten Fahrzeug 2, d. h. beispielsweise bei einem Elektrofahrzeug oder Hybridfahrzeug, ist jedoch, dass ein Energieinhalt der Y-Kondensatoren CyF+, CyF-, CyL+, CyL- durch einen Fahrzeugnutzer spürbar ist, wenn er ein Hochvoltpotential HV+, HV- berühren kann und gleichzeitig in Verbindung mit dem Erdpotential ist. Er erhält dann einen elektrischen Schlag. Je nach Größe dieses elektrischen Schlages kann dies gesundheitsgefährdend sein. Beispielsweise kann es zu Herzkammerflimmern oder zum Tod führen. Ein solcher elektrischer Schlag stellt einen so genannten "Einfachfehler" dar und ist zu vermeiden. Daher ist dieser Energieinhalt der Y-Kondensatoren CyF+, CyF-, CyL+, CyL- normativ begrenzt, um eine Gefährdung des Fahrzeugnutzers auszuschließen.

Aus Sicht der Hochvoltsicherheit sind somit kleine Kapazitätswerte der Y-Kondensatoren CyF+, CyF-, CyL+, CyL- vorteilhaft. Normativ, beispielsweise geregelt in der Vorschrift LV123, gibt es die Anforderung, einen maximalen Energieinhalt, insbesondere 0,2 J, in den Y-Kondensatoren CyF+, CyF-, CyL+, CyL- nicht zu überschreiten oder so genannte "alternative measures", d. h. alternative Maßnahmen, vorzusehen, zum Beispiel eine verstärkte Isolation. Dies hat jedoch stets zur Folge, dass beim einem Koppeln von zwei Hochvoltsystemen, beispielsweise Fahrzeug 2 und Gleichstromladestation 5, bei der Wahl der verstärkten Isolation als "alternative measure" immer beide Teilnehmer gleichzeitig über diese verstärkte Isolation verfügen müssen. Dies kann derzeit jedoch nicht sichergestellt werden.

In anderen Normen, beispielsweise SAE J1772, IEC 60479-1 und IEC60479-2, wird nicht der Energieinhalt der Y-Kondensatoren CyF+, CyF-, CyL+, CyL- als gesundheitsgefährdende Größe genannt, die nicht überschritten werden darf, sondern es wird eine Ladungsmenge als schädigender Mechanismus genannt, die einen vorgegebenen Wert nicht überschreiten darf. Beispielsweise ist hierzu ein Graph einer Relation einer Dauer eines Körperstroms IR_{K} über einen Wert des Körperstroms IR_{K} angegeben. Ein Alternativweg wie beispielsweise eine verstärkte Isolation wird hier nicht akzeptiert.

Figur 1 zeigt einen Schaltungsaufbau einer Ausführungsform des als Hochvoltnetz ausgebildeten elektrischen Gleichstromnetzes 1 bei einem Gleichstromladevorgang des Fahrzeugs 2. Das Gleichstromnetz 1 umfasst daher das Hochvoltbordnetz 3 des Fahrzeugs 2 und die mittels eines Ladekabels 4 daran angeschlossene Gleichstromladestation 5. Dabei ist im dargestellten Beispiel das Ladekabel 4 bereits mit Anschlusskontakten AK+, AK- eines Gleichstromladeanschlusses des Fahrzeugs 2 verbunden und Ladeschütze LS+, LS- des Fahrzeugs 2 in Hochvoltpotentialleitungen HV+L, HV-L sind noch geöffnet.

Auf der linken Seite befindet sich die Gleichstromladestation 5 mit einer Ladestationsspannungsquelle 8, einem Ladestationinnenwiderstand R_{LS} und den Y-Kondensatoren CyL+, CyL-.

Rechts daneben ist das Ladekabel 4 dargestellt.

Rechts daneben ist das Fahrzeug 2 mit seinem Hochvoltbordnetz 3 dargestellt, umfassend die Ladeschütze LS+, LS-, die Y-Kondensatoren CyF+, CyF-, zum Beispiel EMV-Filter, einen X-Kondensator Cx, beispielsweise eines Gleichstromzwischenkreises, und die Hochvoltbatterie 6 mit ihren Hauptschützen HS+, HS-. Die Hochvoltbatterie 6 ist dargestellt als eine elektrische Batterieenergiequelle 7, umfassend beispielsweise eine Mehrzahl elektrisch in Reihe und/oder parallel geschalteter Einzelzellen, mit einem Batterieinnenwiderstand R_{Batt}.

Zusätzlich ist in diesem Schaltplan der menschliche Körper MK mit einem Körperwiderstand R_{K} und einem Schaltersymbol für einen Isolationsfehler IF, beispielsweise bei einem defekten Ladekabel 4, hier beispielhaft ein Fehler am Pluspotential HV+, dargestellt. Der Isolationsfehler IF kann ebenso am Minuspotential HV- auftreten. Dies ist hier nicht dargestellt. Tritt der Isolationsfehler IF auf, ist das Schaltersymbol geschlossen. Es erfolgt bei einem solchen Isolationsfehler IF und einem Kontakt des menschlichen Körpers MK mit einem der Hochvoltpotentiale HV+, HV- und einem Bezugspotential M eine Entladung durch den menschlichen Körper MK.

Um diese Entladung durch den menschlichen Körper MK zu vermeiden oder zumindest auf ein, insbesondere bezüglich einer Gesundheitsgefährdung, zulässiges Maß zu verringern, ist eine Schutzvorrichtung 8 mit einer Schutzschaltung 9 zur Reduzierung des Stromschlags durch die Y-Kondensatoren CyF+, CyF-, CyL+, CyL- vorgesehen. Die Schutzvorrichtung 8 umfasst im dargestellten Beispiel eine erste Spannungsmessvorrichtung SV1 zwischen der Pluspotentialleitung HV+L und der Bezugspotentialleitung ML zur Messung einer Spannung zwischen der Pluspotentialleitung HV+L und der Bezugspotentialleitung ML, d. h. zwischen dem Pluspotential HV+ und dem Bezugspotential M, insbesondere Massepotential, insbesondere der Fahrzeugrohbaumasse, und eine zweite Spannungsmessvorrichtung SV2 zwischen der Minuspotentialleitung HV-L und der Bezugspotentialleitung ML zur Messung einer Spannung zwischen der Minuspotentialleitung HV-L und der Bezugspotentialleitung ML, d. h. zwischen dem Minuspotential HV- und dem Bezugspotential M, insbesondere Massepotential, insbesondere der Fahrzeugrohbaumasse.

Alternativ kann in einer nicht dargestellten Ausführungsform auch die erste Spannungsmesseinrichtung zwischen einem HV-Potential (HV- oder HV+) und dem Bezugspotential M angeordnet sein und die jeweilige zweite Spannungsmesseinrichtung zwischen den beiden HV-Potentialen (HV- und HV+) angeordnet sein.

Die Spannungsmessungen, insbesondere die Spannungsmessvorrichtungen SV1, SV2, steuern beim Unterschreiten eines vorgegebenen Spannungswertes einen dazugehörigen Schutzschalter SS1, SS2 an. Die Schutzschalter SS1, SS2 sind beispielsweise jeweils als ein Halbleiterschalter, beispielsweise MOSFET, ausgebildet. Dadurch wird ein Entladenetzwerk zwischen dem Pluspotential HV+ und dem Bezugspotential M, insbesondere der Rohbaumasse, bzw. ein Entladenetzwerk zwischen dem Minuspotential HV- und dem Bezugspotential M, insbesondere der Rohbaumasse, geschalten. Diese Entladenetzwerke sind im dargestellten Beispiel Schutzschaltungsteile 9.1, 9.2 der Schutzschaltung 9.

Das jeweilige Entladenetzwerk, d. h. der jeweilige Schutzschaltungsteil 9.1, 9.2, besteht vorzugsweise aus einem ungeladenen Kondensator, im Folgenden als Schutzkondensator Cs, Cs1, Cs2 bezeichnet, und einem elektrisch parallel geschalteten Widerstand, im Folgenden als Entladewiderstand Re, Re1, Re2 bezeichnet. Zusätzlich ist ein Schutzwiderstand Rs, Rs1, Rs2 vorgesehen, welcher zum Schutzkondensator Cs, Cs1, Cs2 elektrisch in Reihe geschaltet ist. Es könnte beispielsweise auch nur der Entladewiderstand Re, Re1, Re2 vorgesehen sein, jedoch muss dieser sehr niederohmig sein, um den Körperstrom IR_{K} schnell zu reduzieren. Nachteilig ist jedoch, dass damit ein niederohmiger Isolationsfehler erzeugt wird. Daher wird im Folgenden nur die Kombination mit Schutzkondensator Cs, Cs1, Cs2 und Entladewiderstand Re, Re1, Re2 betrachtet.

Der jeweilige Re, Re1, Re2 stellt sicher, dass der elektrisch parallel geschaltete Schutzkondensator Cs, Cs1, Cs2 im Moment des Zuschaltens spannungsfrei war. Nach dem Zuschalten sorgt er für eine schnelle Entladung der Y-Kondensatoren CyF+, CyF-, CyL+, CyL- des betroffenen Hochvoltpotentials HV+, HV-. Im dargestellten Beispiel gemäß Figur 1 ist die Schutzvorrichtung 8 mit der Schutzschaltung 9 im Fahrzeug 2 angeordnet dargestellt. Sie kann aber bei gleicher Funktion auch in der Gleichstromladestation 5 angeordnet sein.

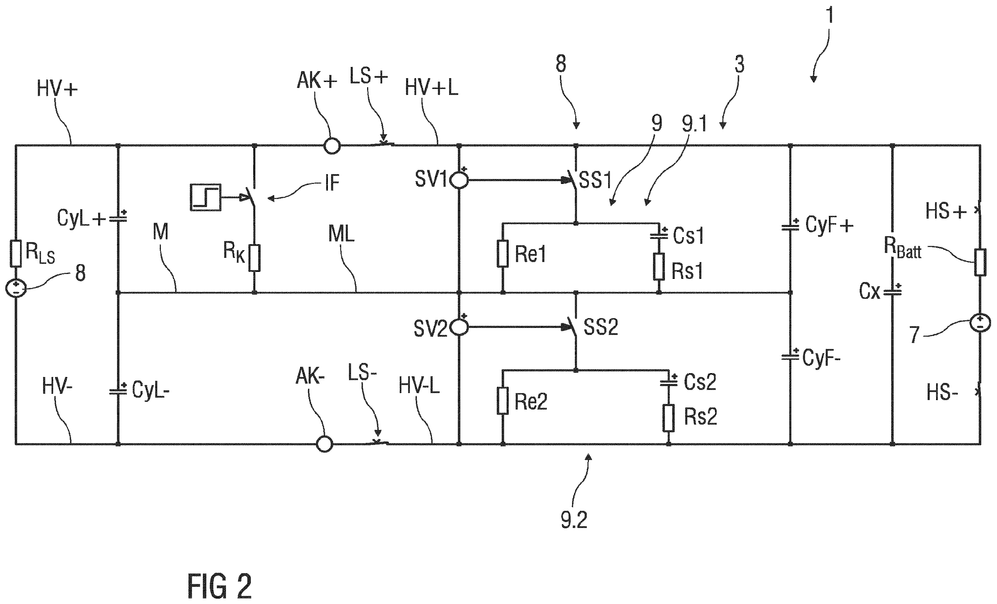

Figur 2 zeigt eine Funktionsweise der Schutzvorrichtung 8, insbesondere der Schutzschaltung 9, insbesondere des jeweiligen Schutzschaltungsteils 9.1, 9.2. Eine Fehlererkennung erfolgt über die Spannungsmessung bezogen auf das Bezugspotential M.

Während des Gleichstromladevorgangs müssen zwar die Hochvoltpotentiale HV+, HV- nicht zwingend symmetrisch bezogen auf das Bezugspotential M verteilt sein, es muss aber ein mindestens einzuhaltender Isolationswert der Hochvoltpotentiale HV+, HV- zum Bezugspotential M sichergestellt werden, beispielsweise größer als 100 Ohm/Volt. Ein Berühren eines Hochvoltpotentials HV+, HV- durch den Menschen äußert sich in einer Reduzierung eines Isolationswiderstandes und daraus resultierend durch eine Verschiebung der Hochvoltpotentiale HV+, HV- bezogen auf das Bezugspotential M.

Ein Isolationswächter im Fahrzeug 2 oder in der Gleichstromladestation 5 prüft zwar zyklisch die Isolationswiderstände, jedoch ist die Zeitspanne bis zur Erkennung eines Isolationsfehlers IF mit maximal 30 Sekunden im Fahrzeug 2 oder maximal zwei Minuten in der Gleichstromladestation 5 viel zu lange, um einen Schutz vor einem Schlag des Menschen bei einer offenen Isolation aus der in den Y-Kondensatoren CyF+, CyF-, CyF+, CyF- gespeicherten Energie darstellen zu können.

Die Funktionsweise der Schutzvorrichtung 8 mit ihrer Schutzschaltung 9 zur Reduzierung eines Cy-Schlages orientiert sich beispielsweise an den in der Norm SAE J1772, IEC 60479-1 und IEC60479-2 beschriebenen Grenzwerten bezüglich des Gefährdungspotentials. Dabei wird als schädigender Mechanismus die Ladungsmenge genannt, die den menschlichen Körper MK durchströmt und in einem Diagramm dargestellt ist. Ziel ist daher eine möglichst schnelle Erkennung und Reduzierung des Körperstromes IR_{K}, um die geflossene Ladung zu minimieren. Ein alleiniges Ansteuern der mechanischen Ladeschütze LS+, LS- und/oder Hauptschütze HS+, HS- wäre dafür zu langsam.

Bei der oben beschriebenen Schutzschaltung 9 wird durch die Spannungsmessung ein Abfall des Isolationswertes schnell erkannt und dadurch sofort, beispielsweise über eine Hardwareschaltung, der entladene Schutzkondensator Cs, Cs1, Cs2 zum betroffenen Hochvoltpotential HV+, HV- mit Körperwiderstand R_{K} bzw.

Y-Kondensator CyF+, CyF-, CyL+, CyL- parallel geschaltet. Somit verringert sich schlagartig die Spannung über diesem Hochvoltpotential HV+, HV- und dem Bezugspotential M. Der Stromfluss durch den menschlichen Körper MK nimmt proportional mit der Spanungsreduzierung ab.

Der Entladewiderstand Re, Re1, Re2 hat dabei zwei Funktionen. Zum einen sorgt er vor dem Zuschalten des Schutzkondensator Cs, Cs1, Cs2 für dessen vollständige Entladung. Zum anderen beschleunigt er nach dem Zuschalten den Abbau der bereits reduzierten Spannung zwischen diesem Hochvoltpotential HV+, HV- und dem Bezugspotential M, wodurch mit weiterhin fallender Spannung auch der Strom durch den menschlichen Körper MK nochmals reduziert wird. Das jeweilig andere Hochvoltpotential HV-, HV+ erhöht im gleichem Maße seine Spannung bezüglich des Bezugspotentials M, wird jedoch nicht durch den menschlichen Körper MK berührt und ist somit unkritisch. In einem weiteren Schritt werden vorteilhafterweise die Hauptschütze HS+, HS- der Hochvoltbatterie 6 geöffnet, Schütze in der Gleichstromladestation 5 und/oder die Ladeschütze LS+, LS- geöffnet und in einem letzten Schritt die aktive Entladung des X-Kondensators Cx und der Y-Kondensatoren CyF+, CyF- des Fahrzeugs 2 durchgeführt.

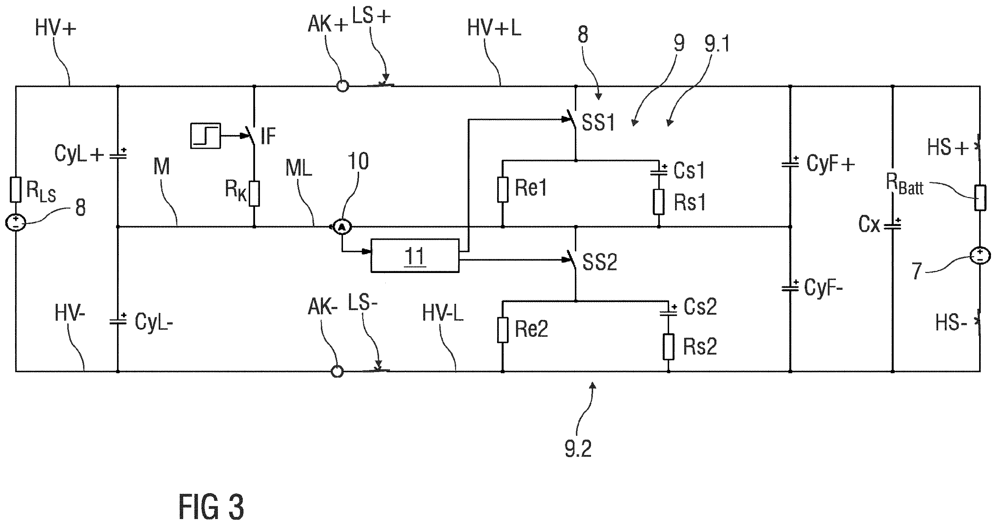

Figur 3 zeigt eine alternative Fehlererkennung über eine Fehlerstrommessung mittels einer Fehlerstrommessvorrichtung 10. Anstelle der Fehlererkennung über eine Spannungsmessung des jeweiligen Hochvoltpotentials HV+, HV- bezogen auf das Bezugspotential M kann auch eine Fehlerstromerkennung verwendet werden. Hierzu umfasst die Schutzvorrichtung 8 die Fehlerstrommessvorrichtung 10 in der Bezugspotentialleitung ML. Der erste Schutzschalter SS1 und/oder der zweite Schutzschalter SS2 sind bei einem mittels der Fehlerstrommessvorrichtung 10 gemessenen Fehlerstrom zum Schließen ansteuerbar und werden somit in einem solchen Fall entsprechend angesteuert und dadurch geschlossen. Es ist hier vorteilhafterweise eine mit der Fehlerstrommessvorrichtung 10 und den Schutzschaltern SS1, SS2 gekoppelte Stromauswerteeinheit 11 zur Auswertung des gemessenen Fehlerstroms und zur Ansteuerung des ersten Schutzschalters SS1 und/oder des zweiten Schutzschalters SS2 in Abhängigkeit vom gemessenen Fehlerstrom vorgesehen.

Diese Methode ist allerdings schwieriger, weil der relativ hohe Ladegleichstrom auf einen sehr geringen Fehlerstrom hin analysiert werden muss. Zudem muss beim Fehlerstrom noch zwischen Gleichtakt- und Gegentaktstörungen unterschieden werden, da der Ausgangsstrom der Gleichstromladestation 5 ebenfalls einen so genannten Ripplestrom, d. h. einen Wechselstromanteil, enthält.

Eine Fehlererkennnung über die Spanungsmessung ist daher einfacher zu realisieren und vorteilhaft. Im Folgenden wird daher die Fehlererkennung mittels Spannungsmessung weiter dargestellt.

Durch die Schutzvorrichtung 8 mit deren Schutzschaltung 9 können vorgegebene Normen, beispielsweise die Norm IEC 60479-1, eingehalten werden. Je höher die Gleichstromladespannung ist, desto höher ist die anliegende Spannung über den Y-Kondensatoren CyF+, CyF-, CyL+, CyL-. Daraus resultiert bei einem angenommenen Körperwiderstand R_{K} auch ein zur Spannung der Y-Kondensatoren CyF+, CyF-, CyL+, CyL- proportional höherer Strom zu Beginn des Berührvorgangs. Der Strom durch den Körper nimmt mit dem Verlauf einer Kondensatorentladung über einen Widerstand ab, insbesondere in Form einer Exonentialfunktion. Der Strom zu Beginn des Berührens berechnet sich aus dem Quotient aus Spannung und Widerstand. Bei einer angenommenen maximalen Ladespannung von 920 V ergibt sich bei einer ebenfalls als symmetrisch angenommenen Hochvoltpotentialverteilung bezogen auf das Bezugspotential M (460V über jedem Y-Kondensator) ein Anfangswert des Berührstroms von 460 V / 1200 Ohm = 383 mA. Ausgehend von diesem Anfangswert des Stromes kann durch eine Divison mit Wurzel 6 dieser Strom auf einen sinusförmigen AC-Strom umgerechnet werden. Dies entspricht dem Wert auf der X-Achse in der sog. C1-Kennlinie in der Norm SAE J 1772. Die Zeitdauer dieses Stromes kann über das Errechnen der Zeitkonstante der Kondensatorentladung t= R x C ermittelt werden. Die entsprechende Zeitdauer (Y-Achse) entspricht dabei 3 x t. Beispielhaft ist eine Verweildauer in diesem Zustand von ca. 100 ms ist noch zulässig. Als Ziel wurde ein verbleibender Körperstrom IR_{K} von kleiner als 5 mA gewählt, d. h. die Restspannung muss kleiner als 6 V sein.

Je höher die Spannung über einem Y-Kondensator CyF+, CyF-, CyL+, CyL- ist, beispielsweise bei einer unsymmetrischen Hochvoltpotentialverteilung bezogen auf das Bezugspotential M, desto kürzer ist die maximale Verweildauer. Ein Strom über 500 mA ist nicht erlaubt, da dabei eine maximale Spannung von 600 V über einem Y-Kondensator CyF+, CyF-, CyL+, CyL- auftreten würde. Darüber muss der Ladevorgang abgebrochen werden.

Mittels der Schutzvorrichtung 8 mit ihrer Schutzschaltung 9 kann daher berechnet werden, ob sie noch in der Lage ist, die angeforderten maximalen Strom-Zeitdauern einzuhalten. Ist diese Bedingung nicht erfüllt, muss der Ladevorgang sofort abgebrochen werden, da ein weiterer Fehler zu einer Personengefährdung führen würde. Eingangsgrößen zu dieser Berechnung sind Spannungsmessungen über den Y-Kondensatoren CyF+, CyF-, CyL+, CyL- beider Hochvoltpotentiale HV+, HV-, Kenntnis über die eigene Reaktionsgeschwindigkeit der Schaltung und die Wertetabelle der maximal zulässigen Strom-Verweildauern.

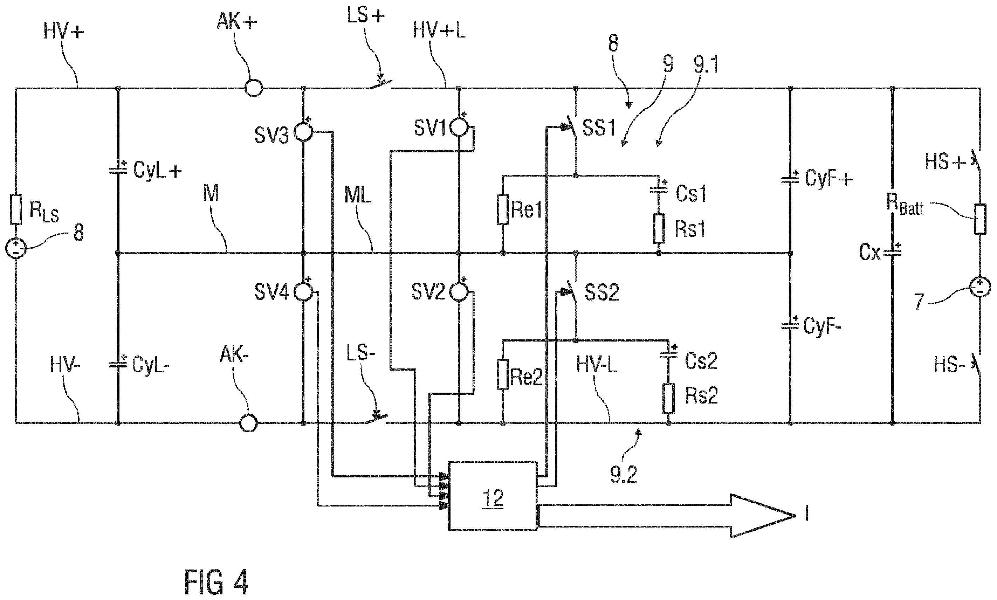

Figur 4 zeigt eine Ermittlung eines sicheren oder unsicheren Betriebszustandes. Die Schaltung wurde dazu erweitert um zwei weitere Spannungsmessvorrichtungen SV3, SV4. Somit ist schon vor dem Zuschalten der Ladeschütze LS+, LS- und dem damit zwangsweise verbundenen Vergrößern der Kapazität der Y-Kondensatoren CyF+, CyF-, CyL+, CyL- aufgrund der Parallelschaltung von Gleichstromladestation 5 und Fahrzeug 2 feststellbar, ob die Schutzschaltung 9 in der Lage wäre, bei einer fehlerhaften Isolation, beispielsweise im Ladekabel 4, die gesetzlichen Grenzwerte einhalten zu können. Idealerweise wird für alle vier Spannungsmessungen die so genannte Schützklebeerkennung des Fahrzeugs 2 verwendet. Bedingung ist allerdings, dass bei der Spannungsauswertung der maximale Zeitverzug bis zum Zuschalten des Schutzkondensators Cs, Cs1, Cs2 nicht überschritten wird. Daher wird dies vorteilhafterweise hardwareseitig umgesetzt und keine Auswertung über einen Mikroprozessor vorgenommen.

Vorgesehen ist hier eine Spannungsauswerteeinheit 12, in welcher mittels den Spannungsmessvorrichtungen SV1 bis SV4 erfasste Spannungen ausgewertet werden und die Schutzschalter SS1, SS2 entsprechen angesteuert werden können. Des Weiteren kann vorgesehen sein, dass diese Spannungsauswerteeinheit 12 weitere Informationen | ausgeben kann, insbesondere an langsamere Steuergeräte oder an die Gleichstromladestation 5. Beispielhafte Informationen I sind ein Öffnen oder Schließen der Ladeschütze LS+, LS-, ein Unterbrechen des Gleichstromladevorgangs, ein Öffnen oder Schließen der Hauptschütze HS+, HS- der Hochvoltbatterie 6, eine Einleitung der aktiven Entladung des Hochvoltzwischenkreises des Fahrzeugs 2 und/oder die Information I, dass alles in Ordnung ist und der Gleichstromladevorgang somit gestartet werden kann.

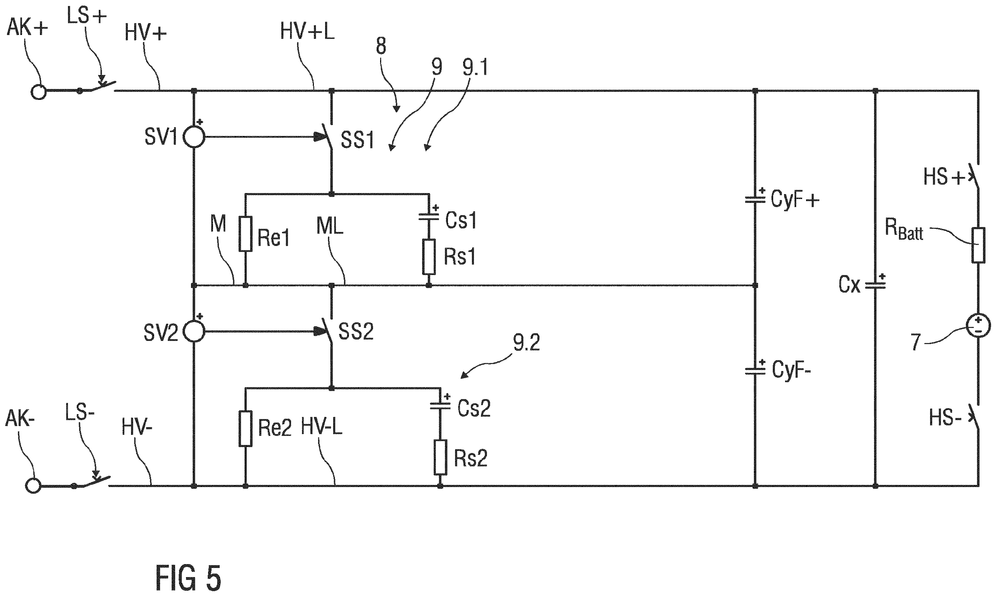

Figur 5 zeigt das Gleichstromnetz 1 ohne die Gleichstromladestation 5, insbesondere für einen Fahrbetrieb des Fahrzeugs 2, einen Wechselstromladebetrieb sowie für Montageund Servicearbeiten. Einziger Unterschied zum Zustand beim Gleichstromladen ist, dass die Gleichstromladestation 5 fehlt. Als Fehlermechanismus kommen beispielsweise ein defektes Hochvoltkabel oder ein defektes Gehäuse einer Hochvoltelektronik infolge eines Unfalls in Betracht. Auch bei Beschädigungen des Hochvoltsystems während der Montage oder im Service kann die Schutzvorrichtung 8 mit ihrer Schutzschaltung 9 die Ladungsmenge reduzieren.

Die Schutzschaltung 9 zur Reduzierung des Y-Schlages bedingt durch einen Isolationsfehler IF bleibt identisch oben beschrieben. Hierfür ist die Schutzvorrichtung 8 mit ihrer Schutzschaltung 9 natürlich im Fahrzeug 2 angeordnet. Die Funktion ist identisch wie zum Fehler in der Isolation während des Gleichstromladens oben beschrieben. Mit dem Erkennen der Verringerung der Spannung zwischen einem der Hochvoltpotentiale HV+, HV- und dem Bezugspotential M wird der jeweilige Schutzkondensator Cs, Cs1, Cs2 hinzugeschaltet und die Gesamtkapazität der Y-Kondensatoren CyF+, CyF-, CyL+, CyL- des betroffenen Hochvoltpotentials HV+, HV- wird entladen. Es wird zudem vorteilhafterweise ein Öffnen der Hauptschütze HS+, HS- der Hochvoltbatterie 6 kommandiert und eine aktive Entladung des X-Kondensators Cx und beider Y-Kondensatoren CyF+, CyF- des Fahrzeugs 2 eingeleitet. Die Ladeschütze LS+, LS- sind bereits vorher geöffnet und bleiben auch immer offen.

Im Folgenden wird eine Simulation einer Entladung der Y-Kondensatoren CyF+, CyF-, CyL+, CyL- aufgrund einer fehlerhaften Isolation während eines Gleichstromladens an einer Gleichstromladestation 5 mit einem Fehlerfall am Pluspotential HV+ beschrieben. Die Spannung der Gleichstromladestation 5 beträgt 920 V. Die Batteriespannung der Hochvoltbatterie 6 beträgt 915 V. Alle Isolationswiderstände betragen 1 MOhm. Die Kapazität der Y-Kondensatoren CyL+, CyL- der Ladestation 5 beträgt jeweils 500 nF. Die Kapazität der Y-Kondensatoren CyF+, CyF- des Fahrzeugs 2 beträgt jeweils 1000 nF. Der Körperwiderstand R_{K} beträgt 1200 Ohm. Der erste Entladewiderstand Re1 des ersten Schutzschaltungsteils 9.1 beträgt 1200 Ohm. Die Kapazität des ersten Schutzkondensators Cs1 des ersten Schutzschaltungsteils 9.1 beträgt 200 µF. Der erste Schutzwiderstand Rs1 des ersten Schutzschaltungsteils 9.1 beträgt 1 Ohm.

Zum Zeitpunkt t=0,05 Sekunden wird über ein Schließen des den Isolationsfehler IF darstellenden Schalters der Körperwiderstand R_{K} zwischen dem Pluspotential HV+ und dem Bezugspotential M geschaltet. Sobald die Spannung zwischen dem Pluspotential HV+ und dem Bezugspotential M unter 350 V abfällt wird der erste Schutzschalter SS1 geschlossen und das Entladenetzwerk, d. h. der erste Schutzschaltungsteil 9.1, hinzugeschaltet.

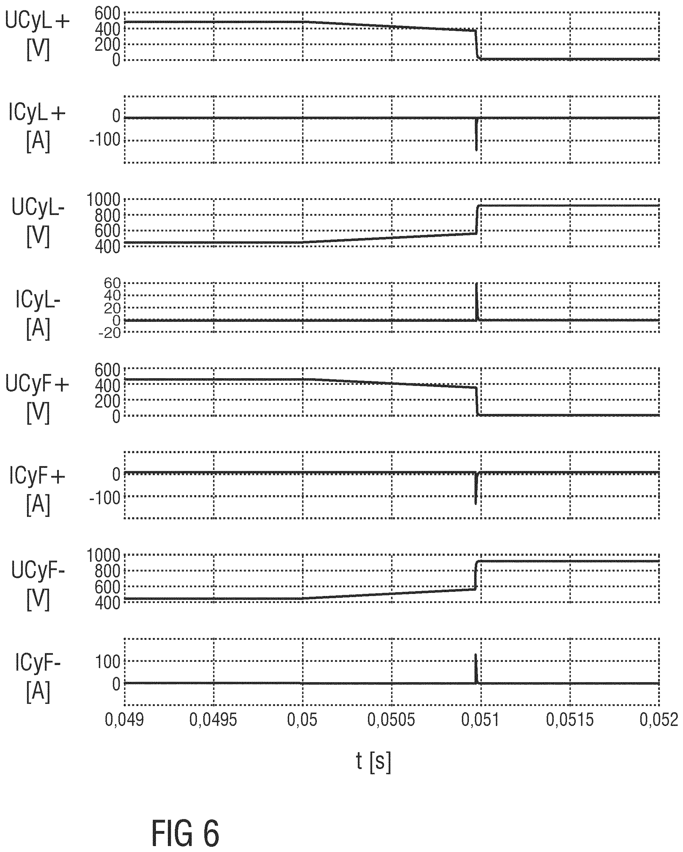

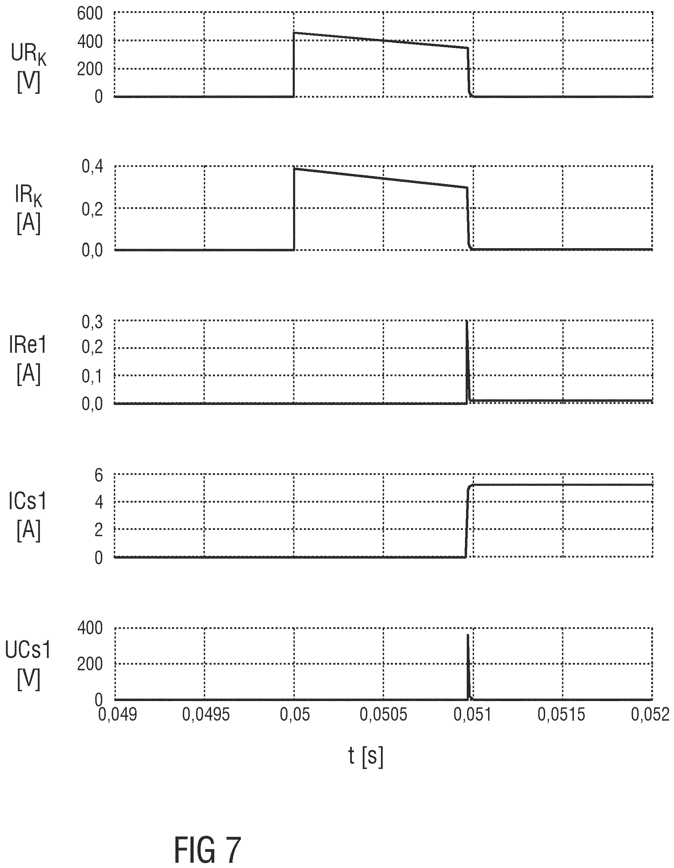

Die Simulation orientiert sich am Zielwert von kleiner 5 mA nach dem Zuschalten des ersten Schutzkondensators Cs1. Für diesen Wert existiert nämlich kein zeitliches Limit. Wird jedoch als Zielwert ein größerer Körperstrom IR_{K} erlaubt, der durch die Entladewiderstände Re, Re1, Re2 schneller abgebaut werden kann, so wäre eine deutliche Verringerung des jeweiligen Schutzkondensators Cs, Cs1, Cs2 möglich. Die Figuren 6 bis 8 zeigen die Simulationsergebnisse. In Figur 6 sind die Spannungen UCyF+, UCyF-, UCyL+, UCyL- und Ströme ICyF+, ICyF-, ICyL+, ICyL- der Y-Kondensatoren CyL+, CyL-, CyF+, CyF- der Gleichstromladestation 5 und des Fahrzeugs 2 über die Zeit t dargestellt. Zum Zeitpunkt t = 0.05 s wird der Körperwiderstand R_{K} zugeschaltet. Es findet eine Umladung der Kapazitäten statt, was in diesem Maßstab bei den Strömen nicht zu erkennen ist, jedoch besser sichtbar ist im Diagramm des Körperstroms IR_{K} in Figur 7. Allerdings ist in den Spannungen UCyF+, UCyF-, UCyL+, UCyL- der Y-Kondensatoren CyL+, CyL-, CyF+, CyF- die Umladung sichtbar. Ab dem Zeitpunkt t = ca. 0.051 s wird der erste Schutzkondensator Cs1 zugeschaltet. Dies führt zu einer fast sofortigen Entladung der Y-Kondensatoren CyL+, CyF+. Eine Restspannung zum Zeitpunkt t = ca. 0.0515 s beträgt 5,2 V. Der Umladestrom (ca. 60 A -130 A je nach Potential) wird durch den ersten Schutzwiderstand Rs1 bestimmt. Nach dem Umladen der Hochvoltpotentiale HV+, HV- durch den Schutzkondensator Cs1, d. h. nach ca. 0,051 s, beträgt die Spannung über dem Minuspotential HV- und dem Bezugspotential M 911,4 V.

In Figur 7 sind die Spannung UR_{K} über dem Körperwiderstand R_{K}, sein Strom IR_{K}, der Strom IRe1 des ersten Entladewiderstandes Re1 sowie der Strom ICs1 und die Spannung UCs1 des ersten Schutzkondensators Cs1 abgebildet. Der Körperstrom IR_{K} beträgt beim Eintritt des Fehlers 383 mA. Er klingt auf einer e-Funktion bis zum Zuschalten des ersten Schutzschalters SS1 auf einen Wert von ca. 292 mA ab. Nach dem Zuschalten des ersten Schutzschalters SS1, wenn die Spannung zwischen dem Pluspotential HV+ zum Bezugspotential M kleiner als 350 V ist, verringert sich der Körperstrom IR_{K} auf einen Wert von ca. 4,3 mA ( bei t = ca. 0.051 s), der dann ebenfalls auf einer e-Funktion abklingt. Der Strom ICs1 im ersten Schutzkondensator Cs1 entspricht beim Zuschalten des ersten Schutzschalters SS1 der Summe der Ströme ICyF+, ICyF-, ICyL+, ICyL- alle Y-Kondensatoren CyL+, CyL-, CyF+, CyF-. Er beträgt ca. 350 A.

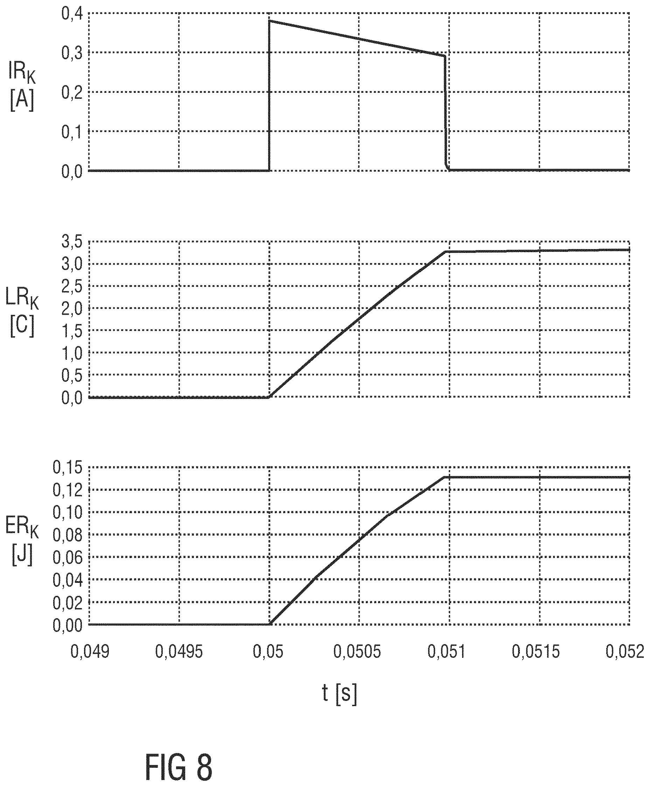

In Figur 8 ist nochmals der Strom IR_{K} des Körperwiderstandes R_{K} sowie die durch den Körperwiderstand R_{K} geflossenen Ladung LR_{K} und die über den Körperwiderstand R_{K} übertragene Energie ER_{K} dargestellt. Die Ladung LR_{K} betragt ca. 0326 C zum Zeitpunkt bei t = ca. 0,051 s und erhöht sich danach nur sehr gering. Die über den Körperwiderstand R_{K} übertragene Energie ER_{K} ist mit 0,131 J niedriger als der in der Norm LV123 geforderte maximale Wert von 0,2 J. Dieser Maximalwert gilt zwar eigentlich für die in den Y-Kondensatoren CyF+, CyF-, CyL+, CyL- gespeicherte Energie, allerdings wird davon ausgegangen, dass dieser Energieinhalt sich im menschlichen Körper MK entlädt und nicht durch eine Schutzschaltung 9 begrenzt wird. Daher kann diese Schutzschaltung 9 auch eine "alternative measure", d. h. eine alternative Maßnahme, darstellen.

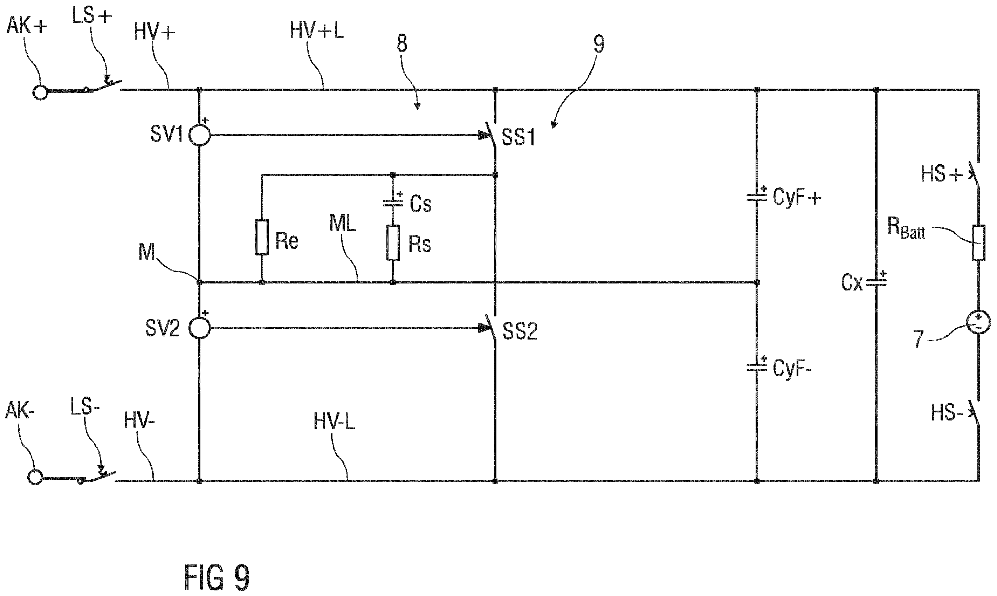

Figur 9 zeigt eine bauteiloptimierte Schutzschaltung 9. Bei der Schutzschaltung 9 zur Reduzierung eines Cy-Schlages ist davon auszugehen, dass nur ein Hochvoltpotential HV+, HV- über den Körperwiderstand R_{K} mit dem Bezugspotential M, beispielsweise der Gehäusemasse, verbunden ist. Wären beide Hochvoltpotentiale HV+, HV- mit dem Bezugspotential M, insbesondere der Gehäusemasse, verbunden, würde dies einem Kurzschluss der Hochvoltbatterie 6 oder Gleichstromladestation 5 gleich kommen, der durch eine Sicherung oder einen Stromsensor mit dadurch gesteuerter Abschaltvorrichtung getrennt werden muss.

Daraus wird deutlich, dass die Schutzschaltung 9 zur Reduzierung eines Cy-Schlags für das Pluspotential HV+ und das Minuspotential HV- nie zur selben Zeit zum Einsatz kommt. Daher können ein einziger Schutzkondensator Cs, Entladewiderstand Re und zudem Schutzwiderstand Rs für die Absicherung beider Hochvoltpotentiale HV+, HV- verwendet werden, wie in Figur 9 gezeigt. Es sind somit keine zwei Schutzschaltungsteile 9.1, 9.2 erforderlich. Die Spannungsmessungen mittels der beiden Spannungsmessvorrichtungen SV1, SV2 und die beiden Schutzschalter SS1, SS2 für die Zuschaltung der Schutzschaltung 9 müssen weiterhin bestehen bleiben. Figur 9 zeigt eine solche Bauteiloptimierung. Dies ist sinnvoll, wenn der Entladewiderstand Re aufgrund von beispielsweise hohen Betriebsspannungen oder großen Kapazitäten der Y-Kondensatoren CyF+, CyF-, CyL+, CyL- im Fahrzeug 2 und der Gleichstromladestation 5 ebenfalls größere Bauteilwerte annehmen muss.

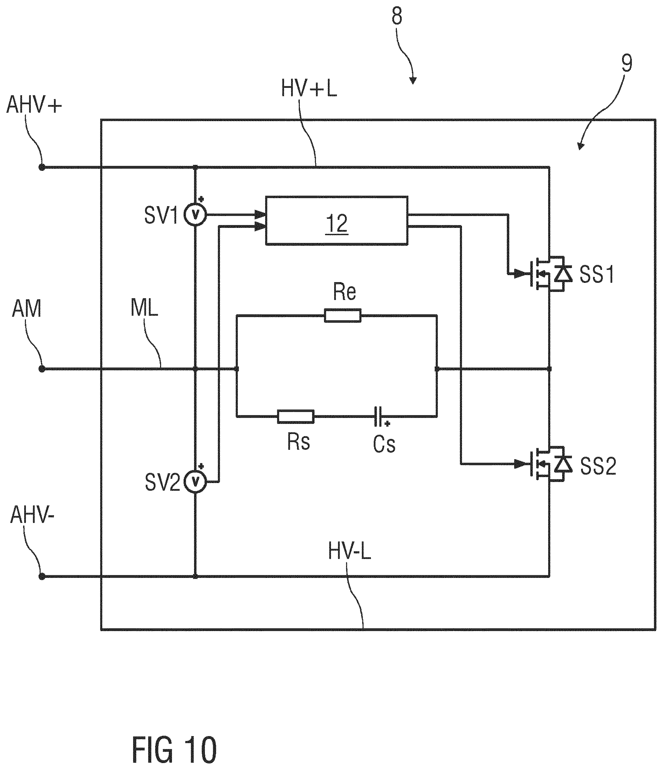

Figur 10 zeigt eine Ausführungsform der Schutzvorrichtung 8, insbesondere mit der bauteiloptimierten Schutzschaltung 9, d. h. ohne die beiden Schutzschaltungsteile 9.1, 9.2. Die Schutzschalter SS1, SS2 sind hier jeweils als MOSFET ausgebildet, es sind jedoch auch andere Halbleiterschalter möglich, beispielsweise IGBT oder Thyristor. Die Schutzvorrichtung 8, insbesondere deren Schutzschaltung 9, ist hier reduziert auf den notwendigen Zusatzaufwand, der im Fahrzeug 2 oder an der Gleichstromladestation 5 zu integrieren ist.

Anschlüsse AHV+, AHV-, AM zum Pluspotential HV+, Minuspotential HV- und Bezugspotential M können sehr klein gehalten werden, da nur im Fehlerfall ein Strom im Millisekundenbereich fliesst. Ansonsten sind die Anschlüsse AHV+, AHV-, AM stromfrei und dienen nur zur Spannungsmessung. Daraus folgt, dass eine schnelle Integration der Schutzvorrichtung 8 mit ihrer Schutzschaltung 9 in ein bestehendes Hochvoltsystem mit geringen Änderungen möglich ist. Wenn mehr Planungszeit vorhanden ist, kann diese Funktion selbstverständlich auch in ein bestehendes Gerät integriert werden.

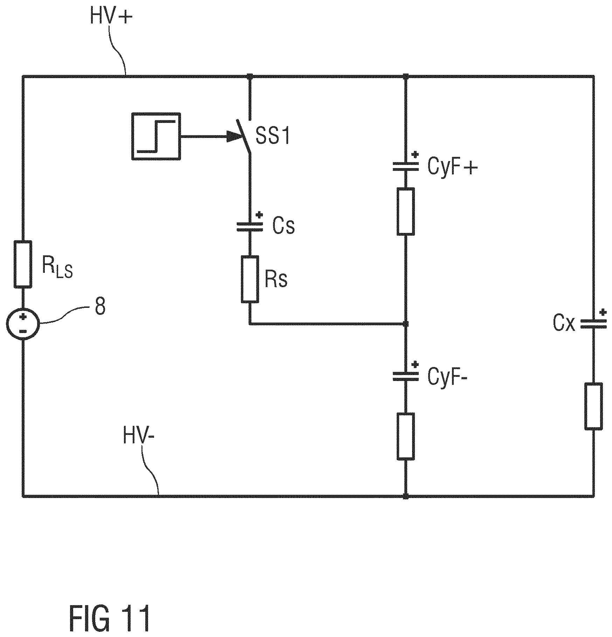

Figur 11 zeigt die Funktionsweise der Spannungsreduzierung durch Hinzufügen eines Kondensators, hier des Schutzkondensators Cs, zu einem bestehenden kapazitiven Spannungsteiler. Der kapazitive Spannungsteiler entspricht im Fahrzeug 2 und beim Gleichstromladen den Y-Kondensatoren CyF+, CyF-. Der hinzugefügte entladene Kondensator entspricht dem Schutzkondensator Cs. Bis zum Zeitpunkt t < 0,5s besteht eine Spannungsteilung zwischen dem Pluspotential HV+ und dem Minuspotential HV- über die Reihenschaltung beider Y-Kondensatoren CyF+, CyF-. Beide Y-Kondensatoren CyF+, CyF- sind gleich groß, beispielsweise 1 µF, wodurch sich die Hochvoltpotentiale HV+, HV- symmetrisch bezogen auf das Bezugspotential M aufteilen.

Eine Sollspannung beträgt in diesem Beispiel 400 V. Diese Spannung fällt über jedem Y-Kondensatoren CyF+, CyF- ab, da die Spannung der Quelle das Zweifache der Sollspannung, also 800 V, beträgt. Zum Zeitpunkt t = 0,5s schaltet der erste Schutzschalter SS1 ein, wodurch der Schutzkondensator Cs mit 10 µF parallel zum Y-Kondensator CyF+ des Pluspotentials HV+ geschaltet wird und die Kapazität somit in Summe auf 11 µF erhöht. Durch den kapazitiven Spannungsteiler mit dem Y-Kondensator CyF- des Minuspotentials HV- reduziert sich somit die Spannung zwischen dem Pluspotential HV+ und dem Bezugspotential M auf ca. 67 V, während die Spannung über den Y-Kondensator CyF- des Minuspotentials HV- auf 733 V ansteigt. Die Spannung über den X-Kondensator Cx bleibt immer konstant auf 800 V.

Die gewünschte Spannung nach dem Zuschalten des Schutzkondensators Cs kann durch die Dimensionierung des Schutzkondensators Cs im Vergleich zu den Y-Kondensatoren CyF+, CyF- eingestellt werden. Je größer der Schutzkondensator Cs im Vergleich zu den Y-Kondensatoren CyF+, CyF- ist, umso geringer ist die verbleibende Restspannung.

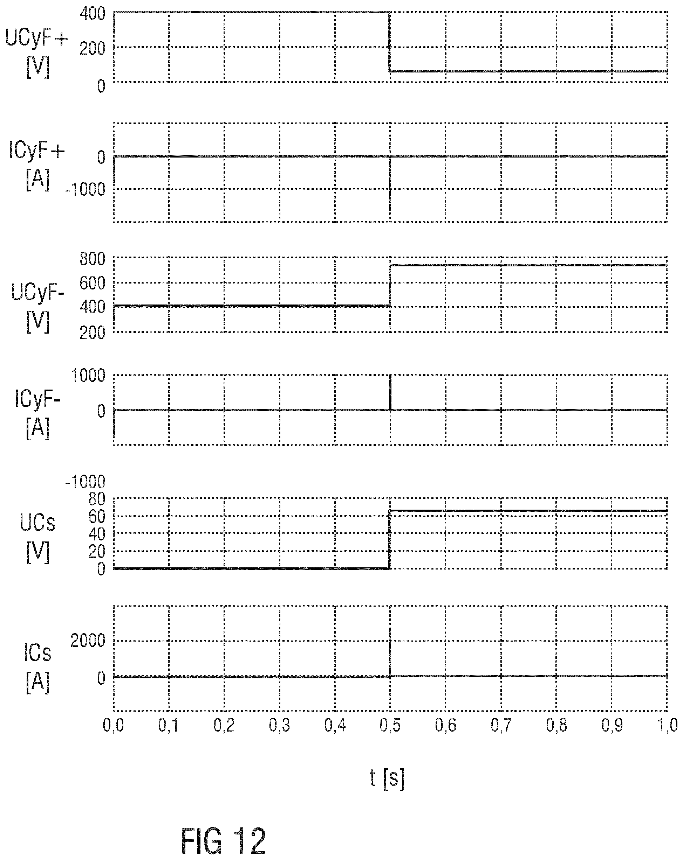

Figur 12 zeigt die Spannungen UCyF+, UCyF-, UCs1 und Ströme ICyF+, ICyF-, ICs1 der Y-Kondensatoren CyF+, CyF- und des Schutzkondensators Cs, welche sich durch die in Figur 11 dargestellte Vorgehensweise ergeben, im Zeitverlauf.

Die Schutzvorrichtung 8 umfasst somit die erste Spannungsmessvorrichtung SV1 zwischen der Pluspotentialleitung HV+L und der Bezugspotentialleitung ML zur Messung der Spannung zwischen der Pluspotentialleitung HV+L und der Bezugspotentialleitung ML und die zweite Spannungsmessvorrichtung SV2 zwischen einer Minuspotentialleitung HV-L und der Bezugspotentialleitung ML zur Messung der Spannung zwischen der Minuspotentialleitung HV-L und der Bezugspotentialleitung ML.

Des Weiteren umfasst die Schutzvorrichtung 8 die Schutzschaltung 9. Die Schutzschaltung 9 umfasst die eine elektrische Reihenschaltung des Entladewiderstands Re und des ersten Schutzschalters SS1 zwischen der Pluspotentialleitung HV+L und der Bezugspotentialleitung ML und die elektrische Reihenschaltung des, d. h. desselben, Entladewiderstands Re und des zweiten Schutzschalters SS2 zwischen der Minuspotentialleitung HV-L und der Bezugspotentialleitung ML, wie in den Figuren 9 und 10 gezeigt.

Alternativ umfasst die Schutzschaltung 9 zwei Schutzschaltungsteile 9.1, 9.2, wobei der erste Schutzschaltungsteil 9.1 die elektrische Reihenschaltung des ersten Entladewiderstand Re1 und des ersten Schutzschalters SS1 zwischen der Pluspotentialleitung HV+L und der Bezugspotentialleitung ML umfasst und der zweite Schutzschaltungsteil 9.2 die elektrische Reihenschaltung des zweiten Entladewiderstands Re2 und des zweiten Schutzschalters SS2 zwischen der Minuspotentialleitung HV-L und der Bezugspotentialleitung ML umfasst, wie in den Figuren 1 bis 5 gezeigt.

Bei beiden Varianten der Schutzschaltung 9 der Schutzvorrichtung 8 ist der erste Schutzschalter SS1 bei einem mittels der ersten Spannungsmessvorrichtung SV1 ermittelten Unterschreiten des vorgegebenen Spannungswertes zum Schließen ansteuerbar und der zweite Schutzschalter SS2 ist bei einem mittels der zweiten Spannungsmessvorrichtung SV2 ermittelten Unterschreiten des vorgegebenen Spannungswertes zum Schließen ansteuerbar.

Alternativ zu den beiden Spannungsmessvorrichtungen SV1, SV2 kann eine Fehlerstrommessvorrichtung 10 in der Bezugspotentialleitung ML vorgesehen sein, wie in Figur 3 gezeigt. Dann ist in beiden Varianten der Schutzschaltung 9 der erste Schutzschalter SS1 und/oder der zweite Schutzschalter SS2 bei einem mittels der Fehlerstrommessvorrichtung 10 gemessenen Fehlerstrom zum Schließen ansteuerbar.

Zum Entladewiderstand Re, Re1, Re2 ist vorteilhafterweise, wie oben bereits erwähnt, der Schutzkondensator Cs, Cs1, Cs2, elektrisch parallel geschaltet, d. h. zum alleinigen Entladewiderstand Re ist der alleinige Schutzkondensator Cs elektrisch parallel geschaltet, wie in den Figuren 9 und 10 gezeigt, oder zum Entladewiderstand Re1, Re2 des jeweiligen Schutzschaltungsteils 9.1, 9.2 ist der jeweilige Schutzkondensator Cs1, Cs2 elektrisch parallel geschaltet, wie in den Figuren 1 bis 5 gezeigt.

Die Schutzschaltung 9 umfasst somit die elektrische Reihenschaltung des Entladewiderstands Re und des ersten Schutzschalters SS1 zwischen der Pluspotentialleitung HV+L und der Bezugspotentialleitung ML und die elektrische Reihenschaltung des Entladewiderstands Re und des zweiten Schutzschalters SS2 zwischen der Minuspotentialleitung HV-L und der Bezugspotentialleitung ML, wobei der Schutzkondensator Cs zum Entladewiderstand Re elektrisch parallel geschaltet ist, wie in den Figuren 9 und 10 gezeigt. Alternativ umfasst die Schutzschaltung 9 die beiden Schutzschaltungsteile 9.1, 9.2, wobei der erste Schutzschaltungsteil 9.1 die elektrische Reihenschaltung des ersten Entladewiderstand Re1 und des ersten Schutzschalters SS1 zwischen der Pluspotentialleitung HV+L und der Bezugspotentialleitung ML umfasst, wobei zum ersten Entladewiderstand Re1 der erste Schutzkondensator Cs1 elektrisch parallel geschaltet ist, und wobei der zweite Schutzschaltungsteil 9.2 die elektrische Reihenschaltung des zweiten Entladewiderstands Re2 und des zweiten Schutzschalters SS2 zwischen der Minuspotentialleitung HV-L und der Bezugspotentialleitung ML umfasst, wobei zum zweiten Entladewiderstand Re2 der zweite Schutzkondensator Cs2 elektrisch parallel geschaltet ist, wie in den Figuren 1 bis 5 gezeigt.

Zum Entladewiderstand Re, Re1, Re2 ist in den hier dargestellten Beispielen nicht nur der Schutzkondensator Cs, Cs1, Cs2 elektrisch parallel geschaltet, sondern es ist eine elektrische Reihenschaltung aus dem Schutzkondensator Cs, Cs1, Cs2 und einem Schutzwiderstand Rs, Rs1, Rs2 elektrisch parallel geschaltet.

Die Schutzschaltung 9 umfasst somit die elektrische Reihenschaltung des Entladewiderstands Re und des ersten Schutzschalters SS1 zwischen der Pluspotentialleitung HV+L und der Bezugspotentialleitung ML und die elektrische Reihenschaltung des Entladewiderstands Re und des zweiten Schutzschalters SS2 zwischen der Minuspotentialleitung HV-L und der Bezugspotentialleitung ML, wobei die elektrische Reihenschaltung aus dem Schutzkondensator Cs und dem Schutzwiderstand Rs zum Entladewiderstand Re elektrisch parallel geschaltet ist, wie in den Figuren 9 und 10 gezeigt. Alternativ umfasst die Schutzschaltung 9 die beiden Schutzschaltungsteile 9.1, 9.2, wobei der erste Schutzschaltungsteil 9.1 die elektrische Reihenschaltung des ersten Entladewiderstand Re1 und des ersten Schutzschalters SS1 zwischen der Pluspotentialleitung HV+L und der Bezugspotentialleitung ML umfasst, wobei zum ersten Entladewiderstand Re1 die elektrische Reihenschaltung aus dem ersten Schutzkondensator Cs1 und dem ersten Schutzwiderstand Rs1 elektrisch parallel geschaltet ist, und wobei der zweite Schutzschaltungsteil 9.2 die elektrische Reihenschaltung des zweiten Entladewiderstands Re2 und des zweiten Schutzschalters SS2 zwischen der Minuspotentialleitung HV-L und der Bezugspotentialleitung ML umfasst, wobei zum zweiten Entladewiderstand Re2 die elektrische Reihenschaltung aus dem zweiten Schutzkondensator Cs2 und dem zweiten Schutzwiderstand Rs2 elektrisch parallel geschaltet ist, wie in den Figuren 1 bis 5 gezeigt.

Beispielsweise ist eine mit der ersten Spannungsmessvorrichtung SV1 und dem ersten Schutzschalter SS1 gekoppelte erste Spannungsauswerteeinheit zur Auswertung einer von der ersten Spannungsmessvorrichtung SV1 ermittelten Spannung und zur Ansteuerung des ersten Schutzschalters SS1 bei Unterschreiten des vorgegebenen Spannungsgrenzwertes vorgesehen und eine mit der zweiten Spannungsmessvorrichtung SV2 und dem zweiten Schutzschalter SS2 gekoppelte zweite Spannungsauswerteeinheit zur Auswertung einer von der zweiten Spannungsmessvorrichtung SV2 ermittelten Spannung und zur Ansteuerung des zweiten Schutzschalters SS2 bei Unterschreiten des vorgegebenen Spannungsgrenzwertes vorgesehen.

Alternativ ist beispielsweise, wie in Figur 4 gezeigt, eine mit den Spannungsmessvorrichtungen SV1, SV2 und den Schutzschaltern SS1, SS2 gekoppelte gemeinsame Spannungsauswerteeinheit 12 zur Auswertung der von der ersten Spannungsmessvorrichtung SV1 ermittelten Spannung und der von der zweiten Spannungsmessvorrichtung SV2 ermittelten Spannung und zur Ansteuerung des ersten Schutzschalters SS1 bei Unterschreiten des vorgegebenen Spannungsgrenzwertes durch die von der ersten Spannungsmessvorrichtung SV1 ermittelte Spannung und zur Ansteuerung des zweiten Schutzschalters SS2 bei Unterschreiten des vorgegebenen Spannungsgrenzwertes durch die von der zweiten Spannungsmessvorrichtung SV2 ermittelte Spannung vorgesehen.

Bei Verwendung der Fehlerstrommessvorrichtung 10 ist entsprechend beispielsweise eine mit der Fehlerstrommessvorrichtung 10 und den Schutzschaltern SS1, SS2 gekoppelte Stromauswerteeinheit 11 zur Auswertung des gemessenen Fehlerstroms und zur Ansteuerung des ersten Schutzschalters SS1 und/oder des zweiten Schutzschalters SS2 in Abhängigkeit vom gemessenen Fehlerstrom vorgesehen.

In einer möglichen Ausführungsform kann, wie in Figur 4 gezeigt, vorgesehen sein, dass die gemeinsame Spannungsauswerteeinheit 12 mit einer dritten Spannungsmessvorrichtungen SV3 und einer vierten Spannungsmessvorrichtung SV4 gekoppelt ist, wobei die dritte Spannungsmessvorrichtung SV3 zwischen der Pluspotentialleitung HV+L und der Bezugspotentialleitung ML zur Messung einer Spannung zwischen der Pluspotentialleitung HV+L und der Bezugspotentialleitung ML angeordnet ist und die vierte Spannungsmessvorrichtung SV4 zwischen der Minuspotentialleitung HV-L und der Bezugspotentialleitung ML zur Messung einer Spannung zwischen der Minuspotentialleitung HV-L und der Bezugspotentialleitung ML angeordnet ist, und wobei in der Pluspotentialleitung HV+L zwischen einer Verbindungsstelle zur ersten Spannungsmessvorrichtung SV1 und einer Verbindungsstelle zur dritten Spannungsmessvorrichtung SV3 eine erste Schalteinheit, hier in Form des Ladeschützes LS+ in der Pluspotentialleitung HV+L, angeordnet ist und in der Minuspotentialleitung HV-L zwischen einer Verbindungsstelle zur zweiten Spannungsmessvorrichtung SV2 und einer Verbindungsstelle zur vierten Spannungsmessvorrichtung SV4 eine zweite Schalteinheit, hier in Form des Ladeschützes LS- in der Minuspotentialleitung HV-L, angeordnet ist.

Im Folgenden werden vorteilhafte Verwendungsmöglichkeiten der Schutzvorrichtung 8 beschrieben. Bei Fahrzeugen 2 mit einem Hochvoltsystem in der 800 V-Ebene wird es schwierig, die normativ geforderten Grenzwerte der Entladung durch Y-Kondensatoren CyF+, CyF-, CyL+, CyL- einzuhalten. Dies gilt im Besonderen für bereits existente Fahrzeuge 2, die durch bereits belegte Bauräume im Fahrzeug 2 keine Anpassungen im Hochvoltsystem für große Zusatzkomponenten erlauben. Hier bietet sich die beschriebene Lösung an, da sie einfach, kostengünstig und mit einem geringen Bauraumerfordernis im Fahrzeug 2 zu installieren ist.

Des Weiteren werden durch die beschriebene Lösung Vorschriften, insbesondere aus Normen, erfüllt, wodurch eine Zulassung des Fahrzeugs 2 erleichtert oder erst ermöglicht wird. Durch diese Schutzvorrichtung 8 und ihre Schutzschaltung 9 werden mit dem Hinzufügen einer kleinen Elektronik die Grenzwerte erreicht, ohne dass am Hochvoltsystem und dessen Komponenten etwas verändert werden muss.

Der in der LV123 geforderte maximale Energieinhalt von 0,2 J wird bereits bei 632 V durch die Gleichstromladestation 5 überschritten. "Alternative measures", d. h. alternative Maßnahmen, sind somit zwingend erforderlich. Als einzige Lösung wird eine doppelte Isolation momentan diskutiert. Alle gekoppelten Systeme, d. h. Fahrzeug 2 und Gleichstromladestation 5, müssen dann gleichzeitig über eine verstärkte Isolation verfügen, was aktuell nicht sichergestellt werden kann. Durch die Schutzvorrichtung 8 und ihre Schutzschaltung 9 kann die durch den menschlichen Körper MK geströmte Energie jedoch ebenfalls auf einen Wert unterhalb von 0,2 J gehalten werden. Sie stellt somit eine weitere Lösung für "alternative measures" dar.

Die Schutzvorrichtung 8 und ihre Schutzschaltung 9 ermöglichen es, bei einer beschädigten Isolation während des Gleichstromladens, beispielsweise bei einem beschädigten Ladestecker oder Ladekabel 4, den gefährlichen Entladestrom der Y-Kondensatoren CyF+, CyF-, CyL+, CyL- beim Kontakt durch den Menschen zu reduzieren. In allen anderen Fahrzeugzuständen wird ebenfalls bei einer beschädigten Isolation der gefährliche Entladestrom beim Kontakt durch den Menschen reduziert.

Eine verbesserte EMV-Entstörung ist durch eine größere Gestaltung der Y-Kondensatoren CyF+, CyF-, CyL+, CyL- möglich. Ein Verzicht auf die Anforderung der doppelten Isolation des gesamten Hochvoltsystems wird ermöglicht. Dies gilt für Fahrzeug 2 und Gleichstromladestation 5.

Die Schutzvorrichtung 8 mit ihrer Schutzschaltung 9 kann im Fahrzeug 2 und/oder in der Gleichstromladestation 5 angeordnet werden.

### Bezugszeichenliste

- 1: Gleichstromnetz
- 2: Fahrzeug
- 3: Hochvoltbordnetz
- 4: Ladekabel
- 5: Gleichstromladestation
- 6: Hochvoltbatterie
- 7: Batterieenergiequelle
- 8: Schutzvorrichtung
- 9: Schutzschaltung
- 9.1, 9.2: Schutzschaltungsteil
- 10: Fehlerstrommessvorrichtung
- 11: Stromauswerteeinheit
- 12: Spannungsauswerteeinheit

- AHV+, AHV-, AM: Anschluss
- AK+, AK-: Anschlusskontakt
- Cs, Cs1, Cs2: Schutzkondensator
- Cx: X-Kondensator
- CyF+, CyF-: Y-Kondensator Fahrzeug
- CyL+, CyL-: Y-Kondensator Gleichstromladestation
- ER_{K}: Energie
- HS+, HS-: Hauptschütz
- HV+, HV-: Hochvoltpotential
- HV+L, HV-L: Hochvoltpotentialleitung
- I: Information
- ICs1: Strom erster Schutzkondensator
- ICyF+, ICyF-: Strom Y-Kondensator Fahrzeug
- ICyL+, ICyL-: Strom Y-Kondensator Gleichstromladestation
- IF: Isolationsfehler
- IRe1: Strom erster Entladewiderstand
- IR_{K}: Strom Körperwiderstand
- LR_{K}: Ladung
- LS+, LS-: Ladeschütz
- M: Bezugspotential
- ML: Bezugspotentialleitung
- MK: menschlicher Körper
- R_{Batt}: Batterieinnenwiderstand
- Re, Re1, Re2: Entladewiderstand
- R_{K}: Körperwiderstand
- R_{LS}: Ladestationinnenwiderstand
- Rs, Rs1, Rs2: Schutzwiderstand
- SS1, SS2: Schutzschalter
- SV1, SV2, SV3, SV4: Spannungsmessvorrichtung
- t: Zeit
- UCs1: Spannung erster Schutzkondensator
- UCyF+, UCyF-: Spannung Y-Kondensator Fahrzeug
- UCyL+, UCyL-: Spannung Y-Kondensator Gleichstromladestation
- UR_{K}: Spannung Körperwiderstand

## Patentansprüche

1. Schutzvorrichtung (8) für ein elektrisches Gleichstromnetz (1), insbesondere für ein Hochvoltnetz, aufweisend
- eine erste Spannungsmessvorrichtung (SV1) zwischen einer Pluspotentialleitung (HV+L) und einer Bezugspotentialleitung (ML) zur Messung einer Spannung zwischen der Pluspotentialleitung (HV+L) und der Bezugspotentialleitung (ML) und eine zweite Spannungsmessvorrichtung (SV2) zwischen einer Minuspotentialleitung (HV-L) und der Bezugspotentialleitung (ML) zur Messung einer Spannung zwischen der Minuspotentialleitung (HV-L) und der Bezugspotentialleitung (ML),
oder
- eine Fehlerstrommessvorrichtung (10) in der Bezugspotentialleitung (ML), und aufweisend eine Schutzschaltung (9) miteiner elektrischen Reihenschaltung eines Entladewiderstands (Re) und eines ersten Schutzschalters (SS1) zwischen der Pluspotentialleitung (HV+L) und der Bezugspotentialleitung (ML) und eine elektrische Reihenschaltung des Entladewiderstands (Re) und eines zweiten Schutzschalters (SS2) zwischen der Minuspotentialleitung (HV-L) und der Bezugspotentialleitung (ML), oder
- zwei Schutzschaltungsteilen (9.1, 9.2), wobei der erste Schutzschaltungsteil (9.1) eine elektrische Reihenschaltung eines ersten Entladewiderstand (Re1) und eines ersten Schutzschalters (SS1) zwischen der Pluspotentialleitung (HV+L) und der Bezugspotentialleitung (ML) umfasst und der zweite Schutzschaltungsteil (9.2) eine elektrische Reihenschaltung eines zweiten Entladewiderstands (Re2) und eines zweiten Schutzschalters (SS2) zwischen der Minuspotentialleitung (HV-L) und der Bezugspotentialleitung (ML) umfasst,
und wobei
- der erste Schutzschalter (SS1) bei einem mittels der ersten Spannungsmessvorrichtung (SV1) ermittelten Unterschreiten eines vorgegebenen Spannungswertes zum Schließen ansteuerbar ist und/oder bei einem mittels der zweiten Spannungsmessvorrichtung (SV2) ermittelten Überschreiten eines vorgegebenen Spannungswertes zum Schließen ansteuerbar ist
und
der zweite Schutzschalter (SS2) bei einem mittels der zweiten Spannungsmessvorrichtung (SV2) ermittelten Unterschreiten des vorgegebenen Spannungswertes zum Schließen ansteuerbar ist und/oder bei einem mittels der ersten Spannungsmessvorrichtung (SV1) ermittelten Überschreiten eines vorgegebenen Spannungswertes zum Schließen ansteuerbar ist,
oder
- der erste Schutzschalter (SS1) und/oder der zweite Schutzschalter (SS2) bei einem mittels der Fehlerstrommessvorrichtung (10) gemessenen Fehlerstrom zum Schließen ansteuerbar ist,
und wobei zum Entladewiderstand (Re, Re1, Re2) ein
Schutzkondensator (Cs, Cs1, Cs2) elektrisch parallel geschaltet ist
**dadurch gekennzeichnet, dass**
zum Entladewiderstand (Re, Re1, Re2) eine elektrische Reihenschaltung aus dem Schutzkondensator (Cs, Cs1, Cs2) und einem Schutzwiderstand (Rs, Rs1, Rs2) elektrisch parallel geschaltet ist.

2. Schutzvorrichtung (8) nach Anspruch 1,
**dadurch gekennzeichnet, dass**
- eine mit der ersten Spannungsmessvorrichtung (SV1) und dem ersten Schutzschalter (SS1) gekoppelte erste Spannungsauswerteeinheit zur Auswertung einer von der ersten Spannungsmessvorrichtung (SV1) ermittelten Spannung und zur Ansteuerung des ersten Schutzschalters (SS1) bei Unterschreiten des vorgegebenen Spannungsgrenzwertes vorgesehen ist und eine mit der zweiten Spannungsmessvorrichtung (SV2) und dem zweiten Schutzschalter (SS2) gekoppelte zweite Spannungsauswerteeinheit zur Auswertung einer von der zweiten Spannungsmessvorrichtung (SV2) ermittelten Spannung und zur Ansteuerung des zweiten Schutzschalters (SS2) bei Unterschreiten des vorgegebenen Spannungsgrenzwertes vorgesehen ist,
oder
- eine mit der ersten Spannungsmessvorrichtung (SV1) und dem zweiten Schutzschalter (SS2) gekoppelte erste Spannungsauswerteeinheit zur Auswertung einer von der ersten Spannungsmessvorrichtung (SV1) ermittelten Spannung und zur Ansteuerung des zweiten Schutzschalters (SS2) bei Überschreiten des vorgegebenen Spannungsgrenzwertes vorgesehen ist und eine mit der zweiten Spannungsmessvorrichtung (SV2) und dem ersten Schutzschalter (SS1) gekoppelte zweite Spannungsauswerteeinheit zur Auswertung einer von der zweiten Spannungsmessvorrichtung (SV2) ermittelten Spannung und zur Ansteuerung des ersten Schutzschalters (SS1) bei Überschreiten des vorgegebenen Spannungsgrenzwertes vorgesehen ist,
oder
- eine mit der Fehlerstrommessvorrichtung (10) und den Schutzschaltern (SS1, SS2) gekoppelte Stromauswerteeinheit (11) zur Auswertung des gemessenen Fehlerstroms und zur Ansteuerung des ersten Schutzschalters (SS1) und/oder des zweiten Schutzschalters (SS2) in Abhängigkeit vom gemessenen Fehlerstrom vorgesehen ist,
oder
- eine mit den Spannungsmessvorrichtungen (SV1, SV2) und den Schutzschaltern (SS1, SS2) gekoppelte gemeinsame Spannungsauswerteeinheit (12) zur Auswertung der von der ersten Spannungsmessvorrichtung (SV1) ermittelten Spannung und der von der zweiten Spannungsmessvorrichtung (SV2) ermittelten Spannung und zur Ansteuerung des ersten Schutzschalters (SS1) bei Unterschreiten des vorgegebenen Spannungsgrenzwertes durch die von der ersten Spannungsmessvorrichtung (SV1) oder zweiten Spannungsmessvorrichtung (SV2) ermittelte Spannung und zur Ansteuerung des zweiten Schutzschalters (SS2) bei Unterschreiten des vorgegebenen Spannungsgrenzwertes durch die von der zweiten Spannungsmessvorrichtung (SV2) oder ersten Spannungsmessvorrichtung (SV1) ermittelte Spannung vorgesehen ist.

3. Schutzvorrichtung (8) nach Anspruch 2,
**dadurch gekennzeichnet, dass**
die gemeinsame Spannungsauswerteeinheit (12) mit einer dritten Spannungsmessvorrichtungen (SV3) und einer vierten Spannungsmessvorrichtung (SV4) gekoppelt ist, wobei die dritte Spannungsmessvorrichtung (SV3) zwischen der Pluspotentialleitung (HV+L) und der Bezugspotentialleitung (ML) zur Messung einer Spannung zwischen der Pluspotentialleitung (HV+L) und der Bezugspotentialleitung (ML) angeordnet ist und die vierte Spannungsmessvorrichtung (SV4) zwischen der Minuspotentialleitung (HV-L) und der Bezugspotentialleitung (ML) zur Messung einer Spannung zwischen der Minuspotentialleitung (HV-L) und der Bezugspotentialleitung (ML) angeordnet ist und wobei in der Pluspotentialleitung (HV+L) zwischen einer Verbindungsstelle zur ersten Spannungsmessvorrichtung (SV1) und einer Verbindungsstelle zur dritten Spannungsmessvorrichtung (SV3) eine erste Schalteinheit angeordnet ist und in der Minuspotentialleitung (HV-L) zwischen einer Verbindungsstelle zur zweiten Spannungsmessvorrichtung (SV2) und einer Verbindungsstelle zur vierten Spannungsmessvorrichtung (SV4) eine zweite Schalteinheit angeordnet ist.

4. Schutzvorrichtung (8) nach einem der vorhergehenden Ansprüche,
**dadurch gekennzeichnet, dass**
der jeweilige Schutzschalter (SS1, SS2) als ein Halbleiterschalter ausgebildet ist.

5. Bordnetz (3), insbesondere Hochvoltbordnetz (3), für ein Fahrzeug (2), umfassend eine Schutzvorrichtung (8) nach einem der vorhergehenden Ansprüche.

6. Fahrzeug (2), insbesondere Elektrofahrzeug oder Hybridfahrzeug, umfassend ein Bordnetz (3) nach Anspruch 5.

7. Gleichstromladestation (5) umfassend eine Schutzvorrichtung (8) nach einem der Ansprüche 1 bis 4.

## Claims

1. Protective device (8) for an electrical DC network (1), in particular for a high-voltage network, comprising
- a first voltage measuring device (SV1), between a positive potential line (HV+L) and a reference potential line (ML), for measuring a voltage between the positive potential line (HV+L) and the reference potential line (ML), and a second voltage measuring device (SV2), between a negative potential line (HV-L) and the reference potential line (ML), for measuring a voltage between the negative potential line (HV-L) and the reference potential line (ML),
or
- a fault-current measuring device (10) in the reference potential line (ML), and comprising a protective circuit (9) having an electrical series circuit of a discharge resistor (Re) and a first circuit breaker (SS1) between the positive potential line (HV+L) and the reference potential line (ML), and having an electrical series circuit of the discharge resistor (Re) and a second circuit breaker (SS2) between the negative potential line (HV-L) and the reference potential line (ML), or
- two protective circuit parts (9.1, 9.2), wherein the first protective circuit part (9.1) has an electrical series circuit of the first discharge resistor (Re1) and a first circuit breaker (SS1) between the positive potential line (HV+L) and the reference potential line (ML), and the second protective circuit part (9.2) has an electrical series circuit of a second discharge resistor (Re2) and a second circuit breaker (SS2) between the negative potential line (HV-L) and the reference potential line (ML),
and wherein
- the first circuit breaker (SS1) can be actuated so as to close if a predetermined voltage value is not met, which is determined by means of the first voltage measuring device (SV1), and/or can be actuated so as to close if a predetermined voltage value is exceeded, which is determined by means of the second voltage measuring device (SV2),
and
the second circuit breaker (SS2) can be actuated so as to close if the predetermined voltage value is not met, which is determined by means of the second voltage measuring device (SV2), and/or can be actuated so as to close if a predetermined voltage value is exceeded, which is determined by means of the first voltage measuring device (SV1),
or
- the first circuit breaker (SS1) and/or the second circuit breaker (SS2) can be actuated so as to close in the case of a fault current measured by means of the fault-current measuring device (10),
and wherein a protective capacitor (Cs, Cs1, Cs2) is electrically connected in parallel with the discharge resistor (Re, Re1, Re2),
**characterized in that**
an electrical series circuit consisting of the protective capacitor (Cs, Cs1, Cs2) and a protective resistor (Rs, Rs1, Rs2) is electrically connected in parallel with the discharge resistor (Re, Re1, Re2).

2. Protective device (8) according to claim 1,
**characterized in that**
- a first voltage evaluation unit coupled to the first voltage measuring device (SV1) and to the first circuit breaker (SS1) is provided for evaluating a voltage determined by the first voltage measuring device (SV1) and for actuating the first circuit breaker (SS1) if the predetermined voltage limit value is not met, and a second voltage evaluation unit coupled to the second voltage measuring device (SV2) and to the second circuit breaker (SS2) is provided for evaluating a voltage determined by the second voltage measuring device (SV2) and for actuating the second circuit breaker (SS2) if the predetermined voltage limit value is not met,
or
- a first voltage evaluation unit coupled to the first voltage measuring device (SV1) and to the second circuit breaker (SS2) is provided for evaluating a voltage determined by the first voltage measuring device (SV1) and for actuating the second circuit breaker (SS2) if the predetermined voltage limit value is exceeded, and a second voltage evaluation unit coupled to the second voltage measuring device (SV2) and to the first circuit breaker (SS1) is provided for evaluating a voltage determined by the second voltage measuring device (SV2) and for actuating the first circuit breaker (SS1) if the predetermined voltage limit value is exceeded,
or
- a current evaluation unit (11) coupled to the fault-current measuring device (10) and to the circuit breakers (SS1, SS2) is provided for evaluating the measured fault current and for actuating the first circuit breaker (SS1) and/or the second circuit breaker (SS2) depending on the measured fault current,
or
- a common voltage evaluation unit (12) coupled to the voltage measuring devices (SV1, SV2) and to the circuit breakers (SS1, SS2) is provided for evaluating the voltage determined by the first voltage measuring device (SV1) and the voltage determined by the second voltage measuring device (SV2), and for actuating the first circuit breaker (SS1) if the voltage determined by the first voltage measuring device (SV1) or by the second voltage measuring device (SV2) does not meet the predetermined voltage limit value, and for actuating the second circuit breaker (SS2) if the voltage determined by the second voltage measuring device (SV2) or by the first voltage measuring device (SV1) does not meet the predetermined voltage limit value.

3. Protective device (8) according to claim 2,
**characterized in that**
the common voltage evaluation unit (12) is coupled to a third voltage measuring device (SV3) and to a fourth voltage measuring device (SV4), wherein the third voltage measuring device (SV3) is arranged between the positive potential line (HV+L) and the reference potential line (ML) for measuring a voltage between the positive potential line (HV+L) and the reference potential line (ML), and the fourth voltage measuring device (SV4) is arranged between the negative potential line (HV-L) and the reference potential line (ML) for measuring a voltage between the negative potential line (HV-L) and the reference potential line (ML), and wherein a first switching unit is arranged in the positive potential line (HV+L) between a connecting point to the first voltage measuring device (SV1) and a connecting point to the third voltage measuring device (SV3), and a second switching unit is arranged in the negative potential line (HV-L) between a connecting point to the second voltage measuring device (SV2) and a connecting point to the fourth voltage measuring device (SV4).

4. Protective device (8) according to any of the preceding claims,
**characterized in that**
the relevant circuit breaker (SS1, SS2) is designed as a semiconductor switch.

5. On-board network (3), in particular a high-voltage on-board network (3), for a vehicle (2), comprising a protective device (8) according to any of the preceding claims.

6. Vehicle (2), in particular an electric vehicle or hybrid vehicle, comprising an on-board network (3) according to claim 5.

7. DC charging station (5) comprising a protective device (8) according to any of claims 1 to 4.

## Revendications

1. Dispositif de protection (8) pour un réseau électrique à courant continu (1), en particulier pour un réseau à haute tension, présentant
- un premier dispositif de mesure de tension (SV1) entre une ligne de potentiel positif (HV+L) et une ligne de potentiel de référence (ML) pour mesurer une tension entre la ligne de potentiel positif (HV+L) et la ligne de potentiel de référence (ML) et un deuxième dispositif de mesure de tension (SV2) entre une ligne de potentiel négatif (HV-L) et la ligne de potentiel de référence (ML) pour mesurer une tension entre la ligne de potentiel négatif (HV-L) et la ligne de potentiel de référence (ML),
ou
- un dispositif de mesure de courant de défaut (10) dans la ligne de potentiel de référence (ML), et présentant un circuit de protection (9) comportant un circuit électrique en série d'une résistance de décharge (Re) et d'un premier disjoncteur (SS1) entre la ligne de potentiel positif (HV+L) et la ligne de potentiel de référence (ML) et un circuit électrique en série de la résistance de décharge (Re) et d'un deuxième disjoncteur (SS2) entre la ligne de potentiel négatif (HV-L) et la ligne de potentiel de référence (ML), ou
- deux parties de circuit de protection (9.1, 9.2), dans lequel la première partie de circuit de protection (9.1) comprend un circuit électrique en série d'une première résistance de décharge (Re1) et d'un premier disjoncteur (SS1) entre la ligne de potentiel positif (HV+L) et la ligne de potentiel de référence (ML) et la deuxième partie de circuit de protection (9.2) comprend un circuit électrique en série d'une deuxième résistance de décharge (Re2) et d'un deuxième disjoncteur (SS2) entre la ligne de potentiel négatif (HV-L) et la ligne de potentiel de référence (ML),
et dans lequel
- le premier disjoncteur (SS1) peut être commandé pour la fermeture en cas de passage au-dessous d'une valeur de tension prédéfinie, déterminé par le biais du premier dispositif de mesure de tension (SV1), et/ou peut être commandé pour la fermeture en cas de passage au-dessus d'une valeur de tension prédéfinie, déterminé par le biais du deuxième dispositif de mesure de tension (SV2)
et
le deuxième disjoncteur (SS2) peut être commandé pour la fermeture en cas de passage au-dessous de la valeur de tension prédéfinie, déterminé par le biais du deuxième dispositif de mesure de tension (SV2), et/ou peut être commandé pour la fermeture en cas de passage au-dessus d'une valeur de tension prédéfinie, déterminé par le biais du premier dispositif de mesure de tension (SV1),
ou
- le premier disjoncteur (SS1) et/ou le deuxième disjoncteur (SS2) peuvent être commandés pour la fermeture en cas de courant de défaut mesuré par le biais du dispositif de mesure de courant de défaut (10),
et dans lequel un condensateur de protection (Cs, Cs1, Cs2) est monté électriquement en parallèle avec la résistance de décharge (Re, Re1, Re2)
**caractérisé en ce que**
un circuit électrique en série constitué du condensateur de protection (Cs, Cs1, Cs2) et d'une résistance de protection (Rs, Rs1, Rs2) est monté électriquement en parallèle avec la résistance de décharge (Re, Re1, Re2).

2. Dispositif de protection (8) selon la revendication 1,
**caractérisé en ce que**
- une première unité d'évaluation de tension couplée au premier dispositif de mesure de la tension (SV1) et au premier disjoncteur (SS1) est prévue pour l'évaluation d'une tension déterminée par le premier dispositif de mesure de la tension (SV1) et pour la commande du premier disjoncteur (SS1) en cas de passage au-dessous de la valeur limite de tension prédéfinie et une deuxième unité d'évaluation de tension couplée au deuxième dispositif de mesure de la tension (SV2) et au deuxième disjoncteur (SS2) est prévue pour l'évaluation d'une tension déterminée par le deuxième dispositif de mesure de la tension (SV2) et pour la commande du deuxième disjoncteur (SS2) en cas de passage au-dessous de la valeur limite de tension prédéfinie,
ou
- une première unité d'évaluation de tension couplée au premier dispositif de mesure de la tension (SV1) et au deuxième disjoncteur (SS2) est prévue pour l'évaluation d'une tension déterminée par le premier dispositif de mesure de la tension (SV1) et pour la commande du deuxième disjoncteur (SS2) en cas de passage au-dessus de la valeur limite de tension prédéfinie et une deuxième unité d'évaluation de la tension couplée au deuxième dispositif de mesure de la tension (SV2) et au premier disjoncteur (SS1) est prévue pour l'évaluation d'une tension déterminée par le deuxième dispositif de mesure de la tension (SV2) et pour la commande du premier disjoncteur (SS1) en cas de passage au-dessus de la valeur limite de tension prédéterminée,
ou
- une unité d'évaluation de courant (11) couplée au dispositif de mesure de courant de défaut (10) et aux disjoncteurs (SS1, SS2) est prévue pour l'évaluation du courant de défaut mesuré et pour la commande du premier disjoncteur (SS1) et/ou du deuxième disjoncteur (SS2) en fonction du courant de défaut mesuré,
ou
- une unité d'évaluation de tension (12) commune couplée aux dispositifs de mesure de la tension (SV1, SV2) et aux disjoncteurs (SS1, SS2) pour l'évaluation de la tension déterminée par le premier dispositif de mesure de tension (SV1) et de la tension déterminée par le deuxième dispositif de mesure de tension (SV2) et pour la commande du premier disjoncteur (SS1) en cas de passage au-dessous de la valeur limite de tension prédéfinie par la tension déterminée par le premier dispositif de mesure de tension (SV1) ou le deuxième dispositif de mesure de tension (SV2) et pour la commande du deuxième disjoncteur de protection (SS2) en cas de passage au-dessous de la valeur limite de tension prédéfinie par la tension déterminée par le deuxième dispositif de mesure de tension (SV2) ou le premier dispositif de mesure de tension (SV1).

3. Dispositif de protection (8) selon la revendication 2,
**caractérisé en ce que**
l'unité d'évaluation de tension commune (12) est couplée à un troisième dispositif de mesure de tension (SV3) et à un quatrième dispositif de mesure de tension (SV4), dans lequel le troisième dispositif de mesure de tension (SV3) est agencé entre la ligne de potentiel positif (HV+L) et la ligne de potentiel de référence (ML) pour mesurer une tension entre la ligne de potentiel positif (HV+L) et la ligne de potentiel de référence (ML) et le quatrième dispositif de mesure de tension (SV4) est agencé entre la ligne de potentiel négatif (HV-L) et la ligne de potentiel de référence (ML) pour mesurer une tension entre la ligne de potentiel négatif (HV- L) et la ligne de potentiel de référence (ML) et dans lequel une première unité de commutation est agencée dans la ligne de potentiel positif (HV+L) entre un point de connexion au premier dispositif de mesure de tension (SV1) et un point de connexion au troisième dispositif de mesure de tension (SV3) et une deuxième unité de commutation est agencée dans la ligne de potentiel négatif (HV-L) entre un point de connexion au deuxième dispositif de mesure de tension (SV2) et un point de connexion au quatrième dispositif de mesure de tension (SV4).

4. Dispositif de protection (8) selon l'une des revendications précédentes,
**caractérisé en ce que**
le disjoncteur (SS1, SS2) respectif est conçu sous la forme d'un commutateur à semi-conducteurs.

5. Réseau de bord (3), en particulier réseau de bord haute tension (3), pour un véhicule (2), comprenant un dispositif de protection (8) selon l'une des revendications précédentes.

6. Véhicule (2), en particulier véhicule électrique ou véhicule hybride, comprenant un réseau de bord (3) selon la revendication 5.

7. Station de charge à courant continu (5), comprenant un dispositif de protection (8) selon l'une des revendications 1 à 4.
